(19) Europäisches Patentamt
European Patent Office
Office européen des brevets

(11) Veröffentlichungsnummer: **0 603 595 A1**

# (12) EUROPÄISCHE PATENTANMELDUNG

(21) Anmeldenummer: **93119273.6**

(22) Anmeldetag: **30.11.93**

(51) Int. Cl.[5]: **C09B 62/20**, D06P 3/66, D06P 3/24, C09B 62/503

(30) Priorität: **04.12.92 DE 4240853**

(43) Veröffentlichungstag der Anmeldung: **29.06.94 Patentblatt 94/26**

(84) Benannte Vertragsstaaten: **CH DE FR GB IT LI**

(71) Anmelder: **HOECHST AKTIENGESELLSCHAFT**
**Brüningstrasse 50**
**D-65929 Frankfurt am Main(DE)**

(72) Erfinder: **Dannheim, Jörg, Dr.**
**Strubbergstrasse 32**
**D-60489 Frankfurt am Main(DE)**
Erfinder: **Russ, Werner Hubert, Dr.**
**Wingertstrasse 8a**
**D-65439 Flörsheim am Main(DE)**

## (54) Faserreakfive Farbstoffe, Verfahren zu deren Herstellung und ihre Verwendung.

(57) Es werden Farbstoffe der allgemeinen Formel (1)

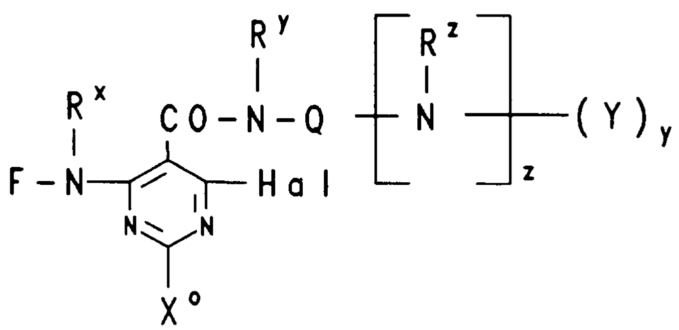

(1)

beschrieben, in welcher bedeuten:

- F ist der Rest eines sulfogruppenhaltigen Azofarbstoffes oder Schwermetallkomplex-Azofarbstoffes oder eines Anthrachinon-, Phthalocyanin-, Formazan-, Azomethin-, Nitroaryl-, Dioxazin-, Phenazin-oder Stilbenfarbstoffes;
- $R^x$ ist Wasserstoff oder niederes Alkyl, wobei -N($R^x$)- auch Teil eines gesättigten Heterocyclus sein kann;
- $R^y$ ist Wasserstoff oder niederes Alkyl;
- Q ist ein durch in Farbstoffen übliche Substituenten gegebenenfalls substituiertes Phenylen oder gegebenenfalls durch Sulfo substituiertes Naphthylen oder Alkylen, das durch 1 oder 2 Heterogruppen substituiert sein kann, oder ist ein Biphenylenrest, dessen Phenylene durch Heterogruppen unterbrochen sein können, oder ist eine aus mindestens einem Alkylenrest oder mindestens einem Phenylenrest kombinierte Gruppe, wobei deren Reste voneinander durch Heterogruppen getrennt und/oder deren Alkylenreste ebenfalls durch Heterogruppen unterbrochen sein können und sowohl die Phenylenreste als auch die Alkylenreste durch in Farbstoffen übliche Substituenten substituiert sein können;
- z ist die Zahl Null oder 1;
- y ist die Zahl 1 oder 2, wobei y gleich 1 ist, falls z gleich 1 ist;
- Y ist Vinylsulfonyl, β-Chlorethylsulfonyl, β-Phosphatoethylsulfonyl oder β-Sulfatoethylsulfonyl;

EP 0 603 595 A1

Hal ist Chlor oder Fluor;

$X^o$ ist Chlor oder Fluor.

Die Farbstoffe haben faserreaktive Eigenschaften und färben nach den hierfür bekannten Methoden hydroxygruppenhaltige und/oder carbonamidgruppenhaltige Materialien, insbesondere Fasermaterialien, wie beispielsweise Cellulosefasern, Wolle und synthetische Polyamidfasern, in farbstarken, echten Tönen.

Die Erfindung liegt auf dem technischen Gebiet der faserreaktiven Farbstoffe.

Aus der deutschen Offenlegungsschrift Nr. 23 14 946, der britischen Patentanmeldungs-Veröffentlichung Nr. 2 103 233 und der U.S.-Patentschrift Nr. 4 118 382 sind Farbstoffe bekannt, die einen halogensubstituierten Pyrimidin-carbonsäureamid-Rest enthalten, wobei der Farbstoffrest an die erwähnte Amidgruppe und auch direkt an den Pyrimidinrest gebunden ist. Diese bekannten Farbstoffe besitzen jedoch anwendungstechnische Mängel, insbesondere in bezug auf die erzielte Farbstärke der Färbungen und der Höhe der Fixiergrade in den Färbeverfahren.

Mit der vorliegenden Erfindung wurden nunmehr verbesserte Farbstoffe gefunden, die der allgemeinen Formel (1)

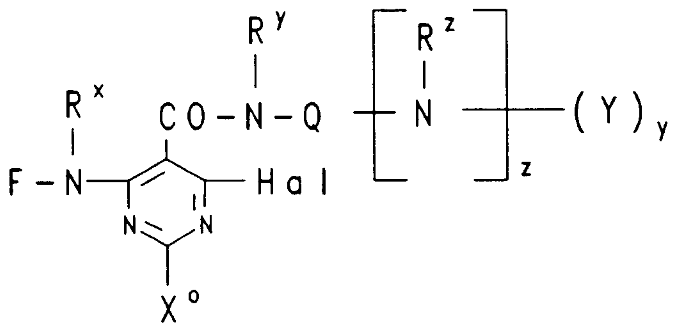

(1)

entsprechen. In dieser Formel bedeuten:

- F ist der Rest eines sulfogruppenhaltigen Mono-, Dis- oder Polyazofarbstoffes oder eines Schwermetallkomplex-Mono-, -Dis- oder -Trisazofarbstoffes oder eines Anthrachinon-, Phthalocyanin-, Formazan-, Azomethin-, Nitroaryl-, Dioxazin-, Phenazin- oder Stilbenfarbstoffes;
- $R^x$ ist Wasserstoff oder Alkyl von 1 bis 4 C-Atomen, wie Methyl und Ethyl, bevorzugt Wasserstoff, wobei -N($R^x$)- auch Teil eines gesättigten Heterocyclus sein kann;
- $R^y$ ist Wasserstoff oder Alkyl von 1 bis 4 C-Atomen, wie Methyl und Ethyl, bevorzugt Wasserstoff;
- $R^z$ ist Wasserstoff oder Alkyl von 1 bis 4 C-Atomen, wie Ethyl und Methyl, bevorzugt Methyl;
- Q ist Phenylen, das durch 1 oder 2 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Halogen, wie Fluor, Chlor und Brom, Nitro, Hydroxy, Carboxy und Sulfo substituiert sein kann, wobei die Substituenten bevorzugt Methyl, Methoxy, Ethoxy, Carboxy und Sulfo sind, oder ein Naphthylen, das durch 1, 2 oder 3 Sulfogruppen substituiert sein kann und bevorzugt durch 1 oder 2 Sulfogruppen substituiert ist, oder Q ist Alkylen von 1 bis 6 C-Atomen, vorzugsweise von 1 bis 4 C-Atomen, wie Methylen, 1,2-Ethylen oder n-Propylen, oder ist Alkylen von 2 bis 8 C-Atomen, vorzugsweise von 4 bis 8 C-Atomen, das durch 1 oder 2 Heterogruppen, wie beispielsweise Gruppen der Formeln -O-, $-SO_2-$, -CO-, -NH-, -CO-NH-, -NH-CO-, $-SO_2-NH-$, $-NH-SO_2-$, $-SO_2-$ und -N(R)-, in welcher R Alkyl von 1 bis 4 C-Atomen, wie Methyl und Ethyl, bedeutet, das durch Hydroxy, Sulfato, Phosphato, Sulfo oder Acetyloxy substituiert sein kann, oder Propionyl oder Acetyl ist, unterbrochen ist, oder O ist alkylen-A-phenylen, phenylen-A-alkylen, alkylen-A-phenylen-A-alkylen,phenylen-A-alkylen-phenylen oder phenylen-A-phenylen, worin jedes phenylen , unabhängig voneinander, einen oben definierten, gegebenenfalls substituierten Phenylenrest bedeutet, jedes alkylen , unabhängig voneinander, einen oben definierte, gegebenenfalls durch 1 oder 2 Heterogruppen unterbrochenen Alkylenrest darstellt und jedes A , unabhängig voneinander, eine direkte Bindung oder eine der obengenannten Heterogruppen ist;
- z ist die Zahl Null oder 1, bevorzugt Null;
- y ist die Zahl 1 oder 2, wobei y gleich 1 ist, falls z gleich 1 ist;
- Y ist Vinylsulfonyl, β-Chlorethylsulfonyl, β-Phosphatoethylsulfonyl oder β-Sulfatoethylsulfonyl, bevorzugt Vinylsulfonyl und insbesondere β-Sulfatoethylsulfonyl;
- Hal ist Chlor oder Fluor, bevorzugt Chlor;
- $X^o$ ist Chlor oder Fluor, bevorzugt Chlor.

Bevorzugt sind Farbstoffe der allgemeinen Formel (1), in welcher Q den Phenylenrest bedeutet und die Gruppierung $-Q-(NR^z)_z-Y$ in meta- oder para-Stellung zur Gruppe -N($R^y$)- an den Phenylenrest gebunden ist. Hiervon sind insbesondere solche bevorzugt, in welchen $R^x$ und $R^y$ beide Wasserstoff bedeuten und z die Zahl Null ist.

Bevorzugt ist F der Rest eines Mono- oder Disazofarbstoffes oder der Rest eines Schwermetallkomplex-Azofarbstoffes, wie eines 1:2-Chromkomplex-, 1:2-Kobaltkomplex- und insbesondere eines o,o'-1:1-Kupferkomplex-Monoaz- oder -Disazofarbstoffes, oder der Rest eines Triphendioxazin-, eines Anthrachinon-, eines Kupferformazan- oder eines Phthalocyaninfarbstoffes, wie eines Nickel- oder insbesondere Kupferphthalocyaninfarbstoffes.

Der Farbstoffrest F besitzt eine oder mehrere, wie 2 bis 6, Sulfogruppen. Der Rest F kann weitere bei organischen Farbstoffen übliche Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Alkanoylaminogruppen von 2 bis 5 C-Atomen, wie die Acetylamino- und Propionylaminogruppe; gegebenenfalls durch Sulfo, Carboxy, Methyl, Ethyl, Methoxy, Ethoxy und/oder Chlor substituierte Benzoylaminogruppen; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-($C_1$-$C_4$-Alkyl)-N-phenylamino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-($\beta$-hydroxyethyl)-amino-, N,N-Di-($\beta$-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkyl-sulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-($\beta$-Hydroxyethyl)-sulfamoyl und N,N-Di-($\beta$-hydroxyethyl)-sulfamoyl; N-Phenyl-sulfamoyl-,Ureido-, Hydroxy-, Carboxy-, Sulfomethyl- und Sulfogruppen.

In der allgemeinen Formel (1) als auch in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM, Phosphatogruppen Gruppen entsprechend der allgemeinen Formel $-OPO_3M_2$ und Sulfatogruppen Gruppen entsprechend der allgemeinen Formel $-OSO_3M$, in welchen

M ein Wasserstoffatom oder eine salzbildendes Metallatom, wie ein Alkalimetall, wie Natrium, Kalium oder Lithium, ist.

Wichtige Azofarbstoffe entsprechend der allgemeinen Formel (1) sind solche, in denen F den Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (3a) und (3b)

$$D_1 - N = N - (E - N = N)_v - K_2 - Z \qquad (3a)$$

$$Z - D_2 - N = N - (E - N = N)_v - K_1 \qquad (3b)$$

und die davon abgeleiteten Schwermetallkomplex-Verbindungen, wie 1:1-Kupferkomplex-Verbindungen, in welchen

$D_1$ der Rest einer Diazokomponente der Benzol- oder Naphthalinreihe ist,
$D_2$ der Rest einer Diazokomponente der Diaminobenzol- oder Diaminonaphthalin-Reihe ist,
E der Rest einer Mittelkomponente der Benzol- oder Naphthalinreihe bedeutet,
$K_1$ der Rest einer Kupplungskomponente der Benzol-, Naphthalin-, Pyrazolon-, 6-Hydroxypyridon(2)- oder Acetessigsäurearylamid-Reihe ist,
$K_2$ ein Rest der Anilin-, Aminonaphthalin- oder 1-Aminophenyl-pyrazolon-Reihe ist,

wobei

$D_1$, $D_2$, E, $K_1$ und $K_2$ für Azofarbstoffe übliche Substitutenten, wie die oben für den Rest F genannten Substituenten, besitzen können, wobei die Substituenten insbesondere aus der Gruppe der Substituenten: Hydroxy, Amino, Alkyl von 1 bis 4 C-Atomen, wie Ethyl und insbesondere Methyl, Alkoxy von 1 bis 4 C-Atomen, wie Ethoxy und Methoxy, Sulfo, Carboxy, Ureido, N'-($C_1$-$C_4$)-Alkyl-ureido, wie N'-Methyl-ureido, N'-Phenyl-ureido, Alkanoylamino von 2 bis 5 C-Atomen, wie Acetylamino und Propionylamino, Benzoylamino, durch Methyl, Ethyl, Sulfo, Carboxy und/oder Chlor substituiertes Benzoylamino, Halogen, wie Fluor, Brom und Chlor, Carbamoyl, N-Phenyl-carbamoyl, Sulfamoyl, N-Methyl- oder N-Ethyl-sulfamoyl, N,N-Diethyl-sulfamoyl, Methylsulfonyl, Ethylsulfonyl, Trifluormethyl und Nitro ausgewählt sind, wobei die Reste $D_1$, $D_2$, E, $K_1$ und $K_2$ zusammen mindestens eine, bevorzugt mindestens zwei, Sulfogruppen besitzen,
v die Zahl Null oder 1 ist und
Z eine Gruppe der allgemeinen Formel (2)

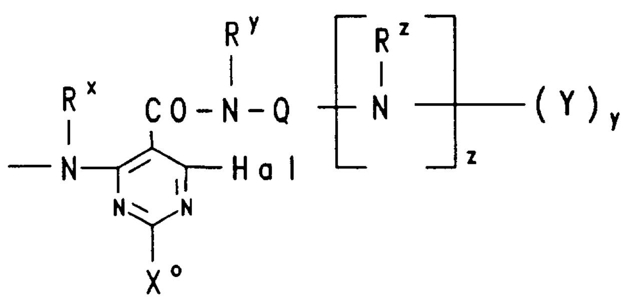

(2)

ist, in welcher $R^x$, $R^y$, $R^z$, Hal, X°, Q, y, z und Y die obengenannten, insbesondere bevorzugten, Bedeutungen besitzen.

Bevorzugt sind weiterhin Disazofarbstoffe der allgemeinen Formel (3c)

$D_1$ - N = N - $K^o$ - N = N - $D_2$ - Z (3c)

in welchen Z die obengenannte Bedeutung besitzt, $D_1$ und $D_2$, jeweils untereinander gleich oder verschieden, jedes den Rest einer Diazokomponente der Benzol- oder Naphthalinreihe bedeutet und $K^O$ den Rest einer bivalenten Kupplungskomponente der Naphthalinreihe darstellt, wobei $D_1$, $D_2$ und $K^O$ die für Azofarbstoffe üblichen Substituenten, wie die oben bereits erwähnten, tragen können, wobei $D_1$, $D_2$ und $K^O$ zusammen mindestens eine Sulfogruppe enthalten.

Solche Azofarbstoffe der allgemeinen Formel (1) sind insbesondere Farbstoffe der allgemeinen Formeln (3d), (3e) und (3f)

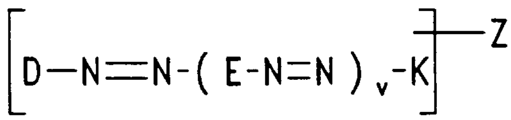

(3d)

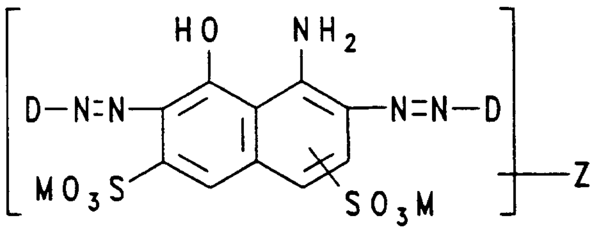

(3e)

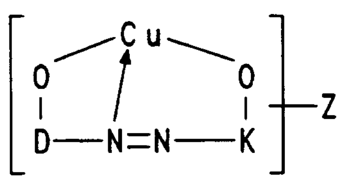

(3f)

in welchen

- Z einen Rest der allgemeinen Formel (2) bedeutet und an den Rest D oder den Rest K gebunden ist,
- D jeweils für den Rest einer Diazokomponente, an die noch ein Azorest gebunden sein kann, steht und die beide zueinander gleiche oder voneinander verschiedene Bedeutungen besitzen können, und D beispielsweise einen Rest $D_1$ obiger oder nachstehender Bedeutung darstellt,
- E den bivalenten Rest einer kupplungsfähigen und diazotierbaren Verbindung, beispielsweise obiger oder nachstehender Bedeutung, bedeutet,
- K den Rest einer Kupplungskomponente, an die noch ein Azorest gebunden sein kann, darstellt, beispielsweise obiger oder nachstehender Bedeutung,
- v für die Zahl Null oder 1 steht und
- M eine der obengenannten Bedeutungen besitzt.

Bevorzugte erfindungsgemäße Metallkomplex-Azofarbstoffe sind beispielsweise Kupferkomplex-Azofarbstoffe der allgemeinen Formel (3g)

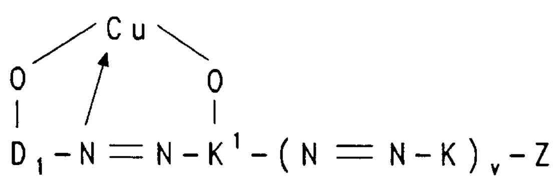

(3g)

in welcher $D_1$, K, v und Z eine der obengenannten Bedeutungen haben und $D_1$ bevorzugt ein nachstehend aus der Formel (5a) oder (5b) ersichtlicher Rest ist und $K^1$ den Rest einer ursprünglich amino- und hydroxygruppenhaltigen Kupplungskomponente bedeutet, wie bevorzugt der Rest eines gegebenenfalls durch 1 oder 2 Sulfogruppen substituierten Aminonaphthols ist, und wobei die beiden das Kupfer komplex bindenden Oxigruppen in ortho-Stellung bzw. vicinaler Stellung zur Azogruppe an $D_1$ und $K^1$ gebunden sind.

Aromatische Reste von Diazokomponenten, die keine faserreaktive Gruppe der Formel (2) tragen, wie von solchen, die den allgemeinen Formeln $D\text{-}NH_2$ bzw. $D_1\text{-}NH_2$ entsprechen, sind beispielsweise solche der allgemeinen Formeln (4a), (4b), (5a) und (5b)

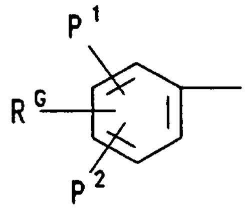 (4a) 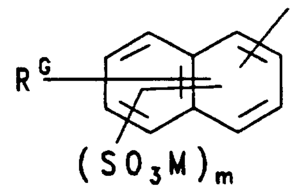 (4b)

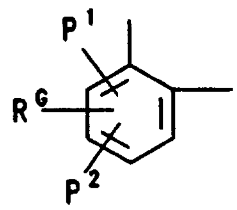 (5a) 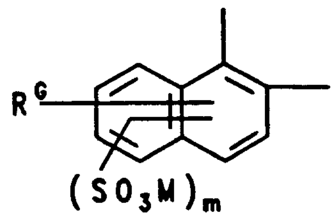 (5b)

in welchen

- $R^G$ Wasserstoff oder Sulfo ist,
- $P^1$ Wasserstoff, Methyl, Ethyl, Methoxy, Ethoxy, Alkanoyl von 2 bis 5 C-Atomen, wie Acetyl und Propionyl, Cyano, Sulfo, Carboxy, Alkoxycarbonyl von 2 bis 5 C-Atomen, wie Methoxycarbonyl und Ethoxycarbonyl, Carbamoyl, N-($C_1$-$C_4$-Alkyl)-carbamoyl, Fluor, Chlor, Brom oder Trifluormethyl ist,
- $P^2$ Wasserstoff, Methyl, Ethyl, Methoxy, Ethoxy, Cyano, Carboxy, Sulfo, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-($C_1$-$C_4$-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,

wobei der Benzolkern in Formel (4a) und (4b) zusätzlich in ortho-Stellung zur freien Bindung, die an die Azogruppe führt, eine Hydroxygruppe enthalten kann,

- m die Zahl Null, 1 oder 2 bedeutet (wobei diese Gruppe im Falle von m gleich Null ein Wasserstoffatom bedeutet) und
- M die obengenannte Bedeutung hat.

Bevorzugt ist hiervon $P^1$ gleich Wasserstoff, Methyl, Methoxy, Brom, Chlor, Sulfo und Carboxy sowie $P^2$ gleich Wasserstoff, Methyl, Methoxy, Chlor, Carboxy, Sulfo und Acetylamino.

Gruppen der allgemeinen Formeln (4a) und (4b) sind beispielsweise:

2-Carboxy-phenyl, 4-Carboxy-phenyl, 3-Carboxy-phenyl, 3-Chlor-6-carboxy-phenyl, 2-Sulfo-phenyl, 3-Sulfo-phenyl, 4-Sulfo-phenyl, 2,5-Disulfo-phenyl, 2,4-Disulfo-phenyl, 3,5-Disulfo-phenyl, 2-Methyl-5-sulfo-phenyl, 2-Methoxy-5-sulfo-phenyl, 2-Methoxy-4-sulfo-phenyl, 3-Sulfo-4-methoxy-phenyl, 5-Sulfo-2-ethoxy-phenyl, 4-Sulfo-2-ethoxy-phenyl, 2-Carboxy-5-sulfo-phenyl, 2,5-Dimethoxy-4-sulfo-phenyl, 2,4-Dimethoxy-5-sulfo-phenyl, 2-Methoxy-5-methyl-4-sulfo-phenyl, 2-Sulfo-4-methoxy-phenyl, 2-Sulfo-4-methyl-phenyl, 2-Methyl-4-sulfo-phenyl, 2-Chlor-4-sulfo-phenyl, 2-Chlor-5-sulfo-phenyl, 2-Brom-4-sulfo-phenyl, 2,6-Dichlor-4-sulfo-phenyl, 2,6-Dimethyl-3-sulfo-phenyl, 2,6-Dimethyl-4-sulfo-phenyl, 3-Acetylamino-6-sulfo-phenyl, 4-Acetylamino-2-sulfo-phenyl, 4-Sulfo-naphth-1-yl, 3-Sulfo-naphth-1-yl, 5-Sulfo-naphth-1-yl, 6-Sulfo-naphth-1-yl, 7-Sulfo-naphth-1-yl, 3,7-Disulfo-naphth-1-yl, 3,6,8-Trisulfo-naphth-1-yl, 4,6,8-Trisulfo-naphth-1-yl, 5-Sulfo-naphth-2-yl, 6- oder 8-Sulfo-naphth-2-yl, 3,6,8-Trisulfo-naphth-2-yl, 6,8-Disulfo-naphth-2-yl, 1,6-Disulfo-naphth-2-yl, 1-Sulfo-naphth-2-yl, 1,5-Disulfo-naphth-2-yl, 3,6-Disulfo-naphth-2-yl und 4,8-Disulfo-naphth-2-yl.

Gruppen des Formelrestes -Q-$(NR^Z)_Z$-Y sind beispielsweise:

2-($\beta$-Sulfatoethylsulfonyl)-phenyl, 3-($\beta$-Sulfatoethylsulfonyl)-phenyl, 4-($\beta$-Sulfatoethylsulfonyl)-phenyl, 2-Carboxy-5-($\beta$-sulfatoethylsulfonyl)-phenyl, 2-Chlor-3-(sulfatoethylsulfonyl)-phenyl, 2-Chlor-4-($\beta$-sulfatoethylsulfonyl)-phenyl, 2-Ethoxy-4- oder -5-($\beta$-sulfatoethylsulfonyl)-phenyl, 2-Ethyl-4-($\beta$-sulfatoethylsulfonyl)-phenyl, 2-Methoxy-5- oder -4-($\beta$-sulfatoethylsulfonyl)-phenyl, 2,4-Diethoxy-5-($\beta$-sulfatoethylsulfonyl)-phenyl, 2,4-Dimethoxy-5-($\beta$-sulfatoethylsulfonyl)-phenyl, 2,5-Dimethoxy-4-($\beta$-sulfatoethylsulfonyl)-phenyl, 2-Methoxy-5-methyl-4-($\beta$-sulfatoethylsulfonyl)-phenyl, 2- oder 3- oder 4-($\beta$-Thiosulfatoethylsulfonyl)-phenyl, 2-Methoxy-5-($\beta$-thiosulfatoethylsulfonyl)-phenyl, 2-Sulfo-4-($\beta$-phosphatoethylsulfonyl)-phenyl, 2-Sulfo-4-vinylsulfonyl-phenyl, 2-Hydroxy-4- oder -5-($\beta$-sulfatoethylsulfonyl)-phenyl, 2-Chlor-4- oder -5-($\beta$-chlorethylsulfonyl)-phenyl, 2-Hydroxy-3-sulfo-5-($\beta$-sulfatoethylsulfonyl)-phenyl, 3- oder 4-($\beta$-Acetoxyethylsulfonyl)-phenyl, 5-($\beta$-Sulfatoethylsulfonyl)-naphth-2-yl, 6- oder 7- oder 8-($\beta$-Sulfatoethylsulfonyl)-naphth-2-yl, 6-($\beta$-Sulfatoethylsulfonyl)-1-

sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, 3- oder 4-{β-[4-(β'-Sulfatoethylsulfonyl)-phen]-ethylamino}-phenyl, 3- oder 4-{β-[2'-Sulfo-4'-(β'-sulfatoethylsulfonyl)-phen]-ethylamino}-phenyl, 3- oder 4-[β-(β'-Chlorethylsulfonyl)-ethylamino]-phenyl, 3- oder 4-[β-(β'-Sulfatoethylsulfonyl)-ethylamino]-phenyl, 3- oder 4-[β-(Vinylsulfonyl)-ethylamino]-phenyl, 3- oder 4-[γ-(β'-Chlorethylsulfonyl)-propylamino]-phenyl, 3- oder 4-[γ-(β'-Sulfatoethylsulfonyl)-propylamino]-phenyl, 3- oder 4-[γ-(Vinylsulfonyl)-propylamino]-phenyl, 3,4-Di-(β-sulfatoethylsulfonyl)-phenyl, 2,5-Di-(β-sulfatoethylsulfonyl)-phenyl, 4-[γ-(β'-Sulfatoethylsulfonyl)-propoxy]-phenyl, 2,5-Bis-[(β-sulfatoethylsulfonyl)-methyl]-phenyl, 3- oder 4-{N-[γ-(β'-Sulfatoethylsulfonyl)-propyl-amidocarbonyl]}-phenyl, 3,5-Bis-{N-[γ-(β'-sulfatoethylsulfonyl)-propyl-amidocarbonyl]}-phenyl, 3-Sulfo-4-{[N-γ-(β'-sulfatoethylsulfonyl)-propyl-amidocarbonyl]-methoxy}-phenyl, 4-{[N-γ-(β'-Sulfatoethylsulfonyl)-propyl-amido-carbonyl]-methoxy}-phenyl, 3- oder 4-[N-Methyl- oder 3- oder 4-[N-Ethyl-N-(β-sulfatoethylsulfonyl)-amido]-phenyl, β-(β'-Sulfatoethylsulfonyl)-ethyl, γ-(β'-Sulfatoethylsulfonyl)-propyl, β-(β'-Chlorethylsulfonyl)-ethyl, γ-(β'-Chlorethylsulfonyl)-propyl, β-[β'-(β''-Chlorethylsulfonyl)-ethoxy]-ethyl und β-[β'-(β''-Sulfatoethylsulfonyl)-ethoxy]-ethyl.

Aromatische Reste Z-D- bzw. Z-$D_2$- von als Diazokomponenten dienenden Verbindungen der allgemeinen Formeln Z-D-$NH_2$ bzw. Z-$D_2$-$NH_2$ oder von deren Diaminobenzol- und Diaminonaphthalin-Verbindungen entsprechend den allgemeinen Formeln $H_2N$-D-$NH_2$ bzw. $H_2N$-$D_2$-$NH_2$ sind bevorzugt Reste der allgemeinen Formeln (6a) und (6b)

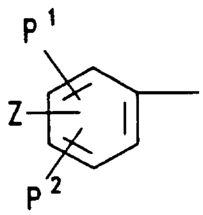 (6a) 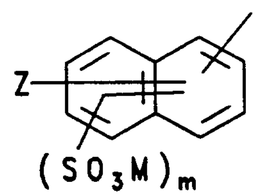 (6b)

in welchen Z, M, m, $P^1$ und $P^2$ die oben angegebenen, insbesondere bevorzugten Bedeutungen haben, wobei der jeweilige Benzolkern in ortho-Stellung zur freien Bindung, die zur Azogruppe führt, zusätzlich eine Hydroxygruppe enthalten kann.

Aromatische Reste E einer kupplungsfähigen und diazotierbaren Verbindung der allgemeinen Formel H-E-$NH_2$ sind beispielsweise solche der allgemeinen Formeln (7a), (7b) und (7c)

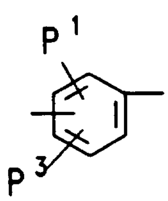 (7a) 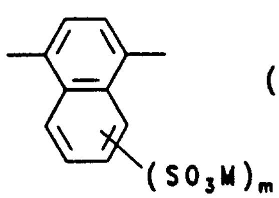 (7b) 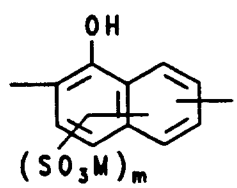 (7c)

in welchen

| | |
|---|---|
| $P^1$, M und m | die oben angegebenen Bedeutungen haben und |
| $P^3$ | Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist. |

Reste K bzw. $K_1$ von Kupplungskomponenten der allgemeinen Formel H-K bzw. H-$K_1$ , die keine faserreaktive Gruppe der Formel (2) tragen, sind beispielsweise solche der allgemeinen Formeln (8a) bis (8h)

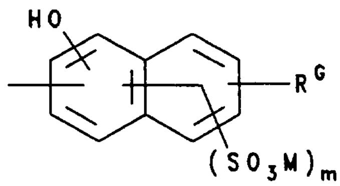

(8a)

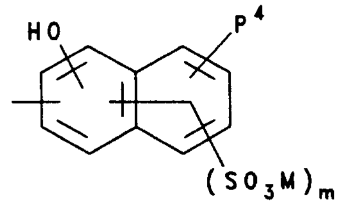

(8b)

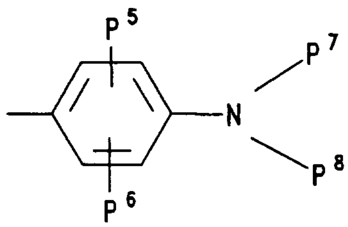

(8c)

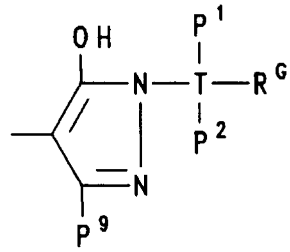

(8d)

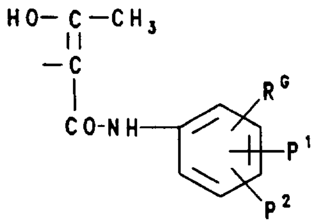

(8e)

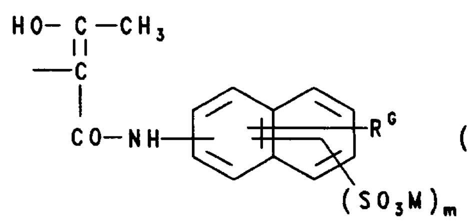

(8f)

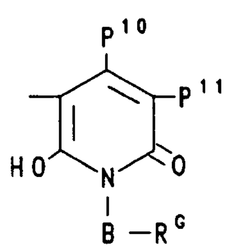

(8g)

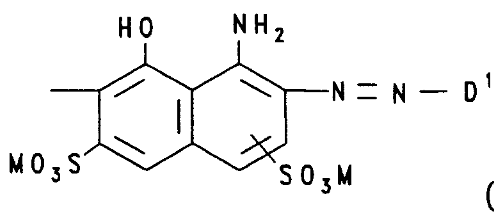

(8h)

in welchen

| | |
|---|---|
| $R^G$, $P^1$, $P^2$, m und M | die obengenannten Bedeutungen haben, |
| $P^4$ | Phenylureido ist, das im Phenylrest durch Substituenten aus der Gruppe Chlor, Methyl, Methoxy, Sulfo und Carboxy substituiert sein kann, oder Benzoylamino ist, das im Benzolrest durch Substituenten aus der Gruppe Chlor, Methyl, Methoxy, Nitro, Sulfo und Carboxy substituiert sein kann, |
| $P^5$ | Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist, |
| $P^6$ | Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist, |
| $P^7$ | Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann, |
| $P^8$ | Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 |

bis 4 C-Atomen, Chlor und/oder Sulfo substituiertes Phenyl ist,

$P^9$ Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist

T für einen Benzol- oder Naphthalinring, bevorzugt Benzolring, steht,

$P^{10}$ Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen oder Phenyl ist, bevorzugt Alkyl von 1 bis 4 C-Atomen oder Phenyl ist,

$P^{11}$ Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,

B Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und

$D^1$ ein Rest der allgemeinen Formel (4a) oder (4b) ist.

Reste -K-Z bzw. $-K_2-Z$ von Kupplungskomponenten der allgemeinen Formel H-K-Z und $H-K_2-Z$ bzw. $H-K-N(R^x)H$ und $H-K_2-N(R^x)H$, in die der faserreaktive Rest entsprechend der später angegebenen Gruppierung $Z^1$ nachträglich eingeführt werden muß, sind beispielsweise Reste der allgemeinen Formeln (9a) bis (9h)

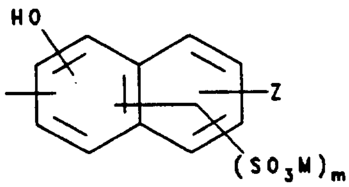 (9a)

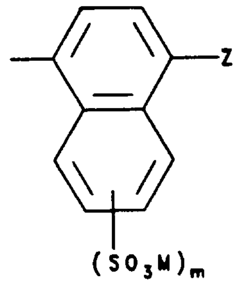 (9b)

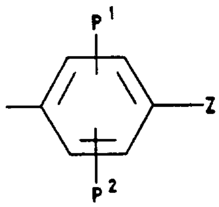 (9c)

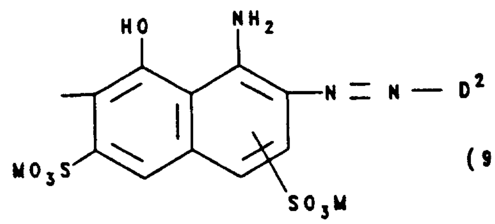 (9d)

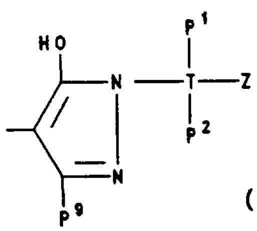 (9e)

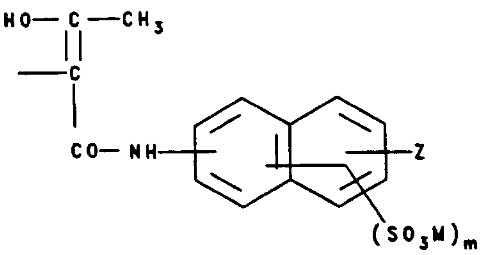 (9f)

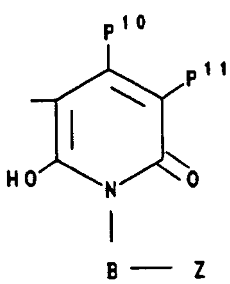 (9g)

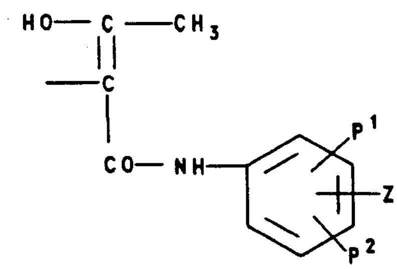 (9h)

in welchen
$P^1$, $P^2$, $P^9$, $P^{10}$, $P^{11}$, B, T, M, m und Z die oben angegebenen, insbesondere bevorzugten, Bedeutungen haben und

$D^2$ als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppe an den aromatischen Kern gebunden.

Reste K bzw. $K^1$ in den Formeln (3f) und (3g) mit einem metallkomplexbindenden Sauerstoffatom, die die Gruppe Z enthalten, sind insbesondere solche der Formeln (10a) bis (10e)

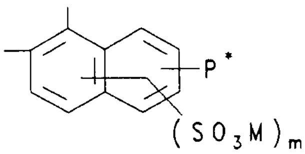

(10a)

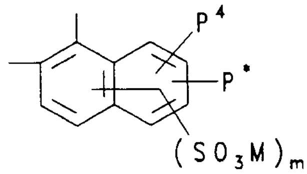

(10b)

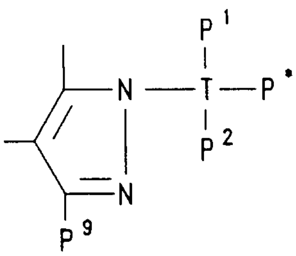

(10c)

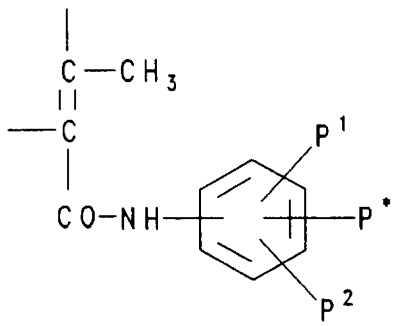

(10d)

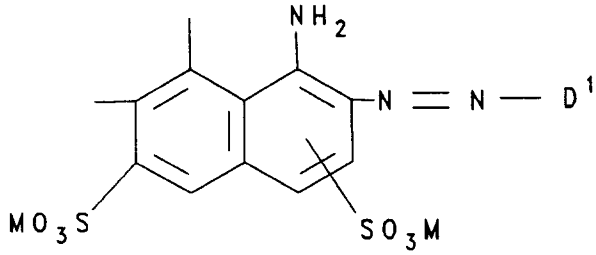

(10e)

in welchen die einzelnen Formelglieder eine der obengenannten Bedeutungen haben und $P^*$ entweder einen Rest Z oder eine Gruppierung der Formel -N=N-K-Z bedeutet.

Von den Azofarbstoffen sind weiterhin bevorzugt solche, die den allgemeinen Formeln (12A) bis (12R)

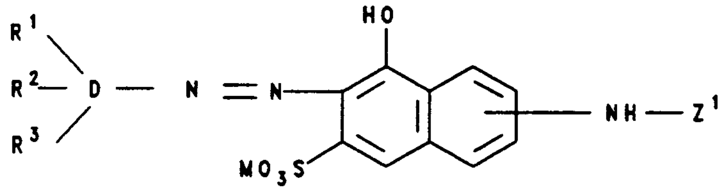

(12A)

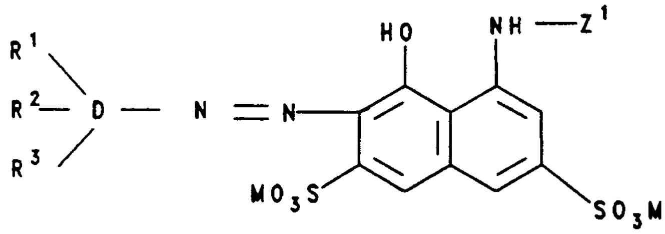

(12B)

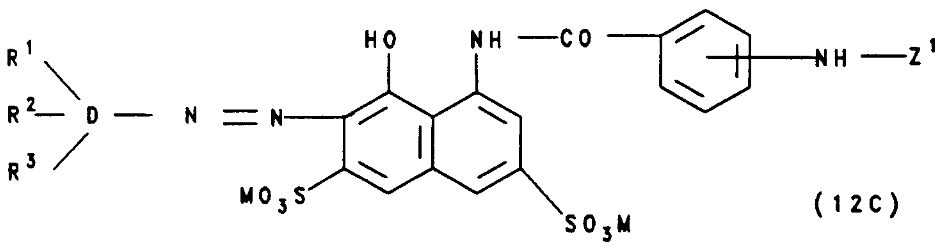

(12C)

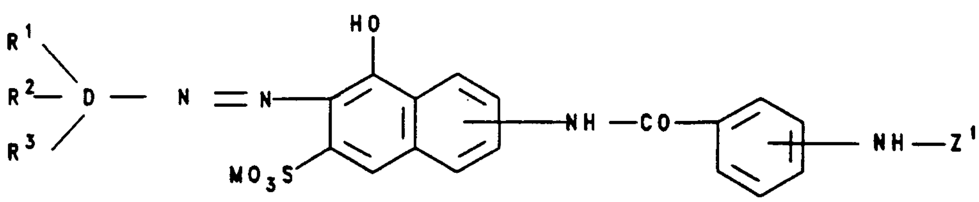

(12D)

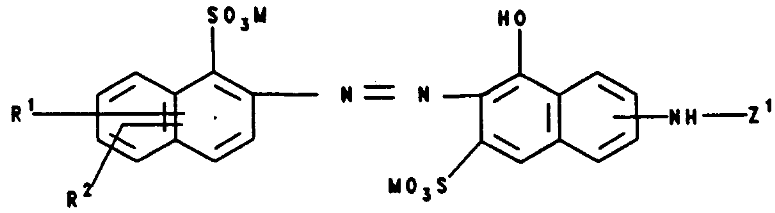

(12E)

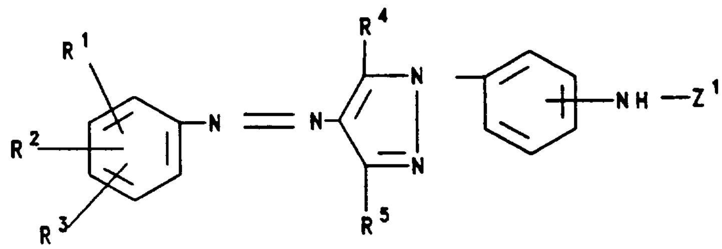

(12F)

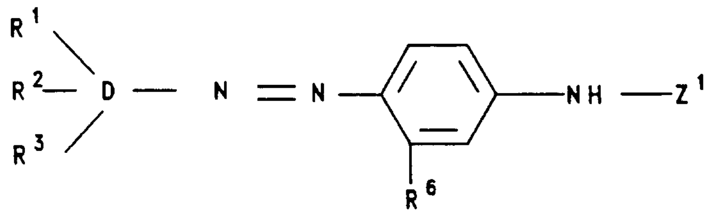

(12G)

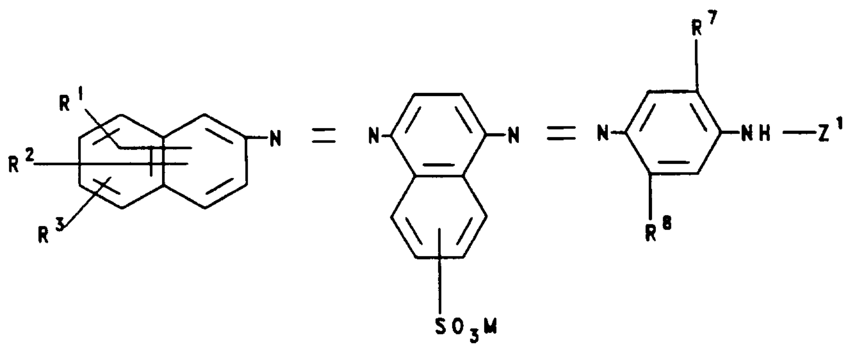

(12H)

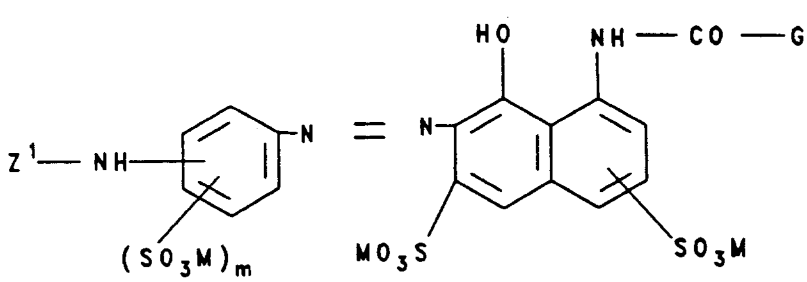

(12J)

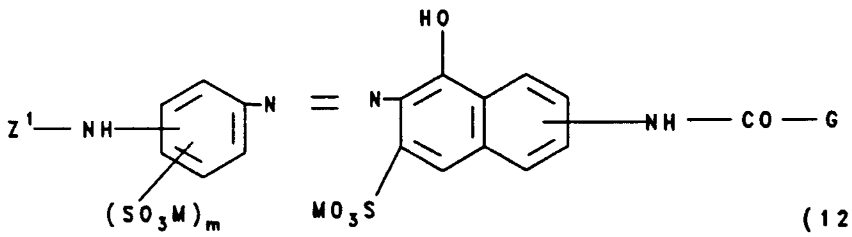

(12K)

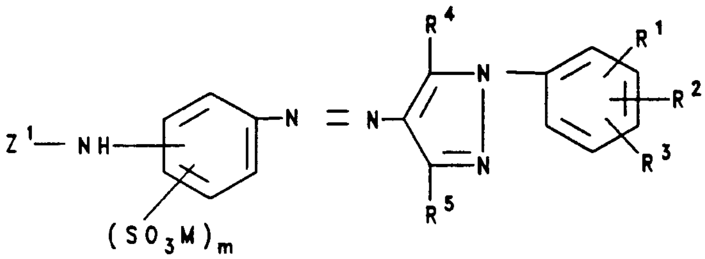

(12L)

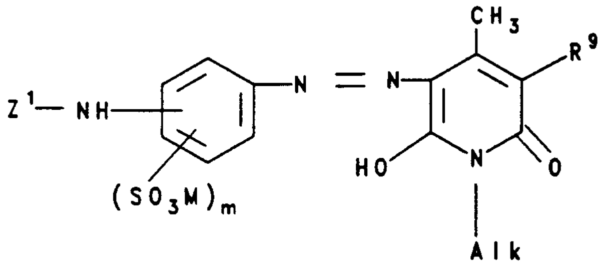

(12M)

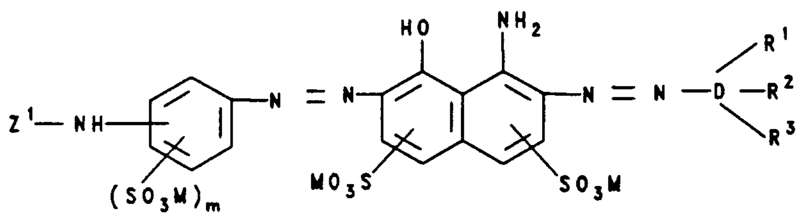

(12N)

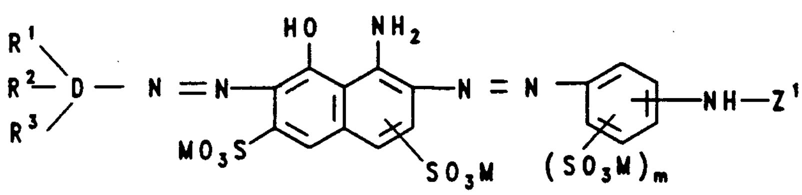

(12P)

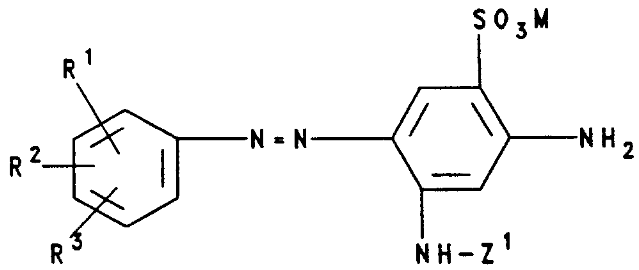

(12Q)

entsprechen, in welchen bedeuten:

$Z^1$ ist ein Rest der allgemeinen Formel (3A)

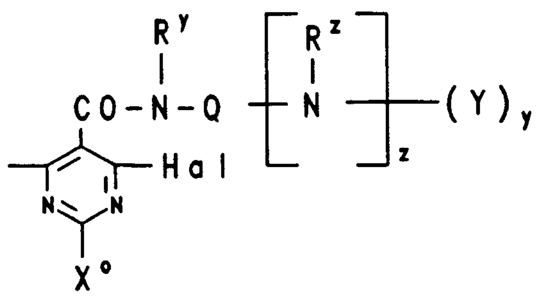

(3A)

in welcher X°, Hal, Q, $R^y$, $R^z$, y, z und Y die obengenannten, insbesondere bevorzugten, Bedeutungen haben;

M hat eine der obengenannten Bedeutungen;

D ist ein Benzolring oder ist ein Naphthalinring, wobei die Azogruppe an den Naphthalinring bevorzugt in β-Stellung gebunden ist und wobei im Falle, daß D den Naphthalinring bedeutet, $R^2$ und $R^3$ bevorzugt jedes, unabhängig voneinander, ein Wasserstoffatom oder eine Sulfogruppe bedeuten;

$R^1$ ist Wasserstoff oder Sulfo;

$R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo und ist bevorzugt Wasserstoff;

$R^3$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff;

$R^4$ ist Hydroxy oder Amino, bevorzugt Hydroxy;

$R^5$ ist Methyl, Carboxy, Carbomethoxy oder Carbethoxy, bevorzugt Methyl oder Carboxy;

$R^6$ ist Acetylamino, Ureido oder Methyl;

$R^7$ ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor;

$R^8$ ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;

$R^9$ ist Wasserstoff, Cyano, Carbamoyl, Sulfamoyl oder Sulfomethyl, bevorzugt Wasserstoff oder Carbamoyl;

$R^{10}$ ist Cyano, Carbamoyl oder Sulfomethyl;

Alk ist Alkyl von 1 bis 4 C-Atomen, wie Methyl und Ethyl, oder Alkyl von 2 bis 4 C-Atomen, wie Ethyl und Propyl, das durch Hydroxy, Carboxy, Sulfo oder Sulfato substituiertsein kann;

G ist Alkyl von 1 bis 4 C-Atomen, wie Ethyl und Propyl, oder ist Benzoyl oder durch Sulfo, Carboxy und/oder Alkyl von 1 bis 4 C-Atomen, wie Methyl, substituiertes Benzoyl;

m ist die Zahl Null, 1 oder 2 (wobei im Falle von m gleich Null diese Gruppe Wasserstoff ist);

in den Verbindungen der Formeln (12A), (12D), (12E) und (12K) steht die Amino- bzw. Amidogruppierung in 2- oder 3-Stellung an den 8-Naphthol-Rest gebunden.

Von den erfindungsgemäßen Anthrachinonfarbstoffen sind insbesondere diejenigen zu erwähnen, die der allgemeinen Formel (13)

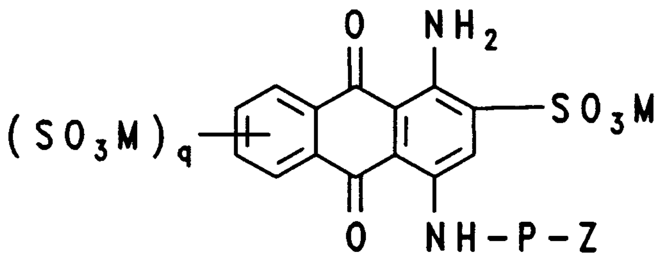

(13)

entsprechen, in welcher

M und Z eine der obengenannten Bedeutungen haben,

P ist Phenylen, das durch 1, 2, 3 oder 4 Substituenten aus der Gruppe Alkyl von 1 bis 4 C-Atomen, wie Methyl und Ethyl, Alkoxy von 1 bis 4 C-Atomen, wie Methoxy und Ethoxy, Halogen, wie Chlor und Brom, Carboxy und Sulfo substituiert sein kann, oder Alkylen von 1 bis 4 C-Atomen, wie Methylen und Ethylen, oder -alk-NH-alk- oder -phen-NH-alk- ist, wobei phen gegebenenfalls substituiertes Phenylen und alk Alkylen von 1 bis 4 C-Atomen, wie Methylen und Ethylen, oder P gegebenenfalls substituiertes Cyclohexylen ist, und

q für die Zahl Null oder 1 steht (wobei im Falle von q gleich Null diese Gruppe Wasserstoff bedeutet).

Von den erfindungsgemäßen Triphendioxazinfarbstoffen sind diejenigen hervorzuheben, die der allgmeinen Formel (14)

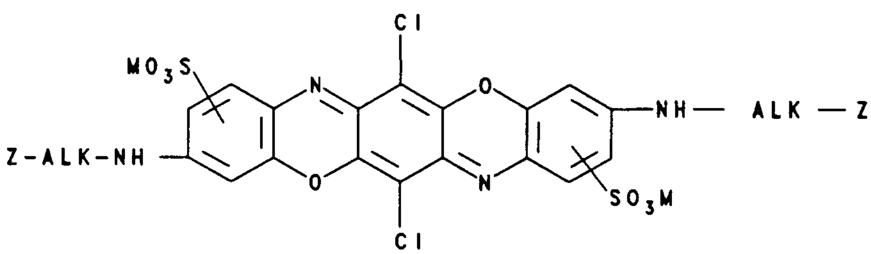

(14)

entsprechen, in welcher M und Z eine der obengenannten Bedeutungen haben und ALK Alkylen von 2 bis 6 C-Atomen ist, das durch 1 oder 2 Heterogruppen unterbrochen und/oder substituiert sein kann, oder Cyclohexylen ist, wobei die beiden Sulfogruppen $-SO_3M$ bevorzugt in ortho-Stellung zum Sauerstoffatom des heterocyclischen Ringes an den Benzolkern gebunden sind.

Von den erfindungsgemäßen Phthalocyaninfarbstoffen sind diejenigen bevorzugt, die der allgemeinen Formel (15)

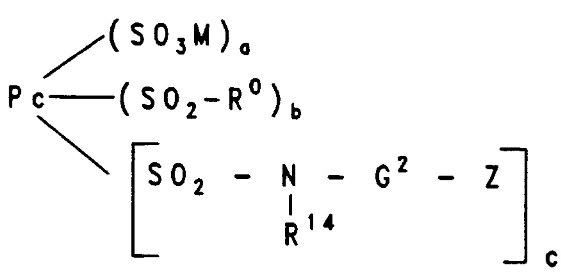

(15)

entsprechen, in welcher bedeuten:

Pc ist der Rest eines Kupfer- oder Nickelphthalocyanins;

$R^O$ ist eine Aminogruppe der Formel $-NR^{11}R^{12}$, in welcher $R^{11}$ und $R^{12}$ unabhängig voneinander Wasserstoff oder Alkyl von 1 bis 4 C-Atomen, das durch Hydroxy oder Sulfo substituiert sein

kann, bedeuten, oder ist ein heterocyclischer, N-haltiger Rest, wie der Morpholino- oder Piperidino-Rest;

- $R^{14}$ ist ein Wasserstoff oder Alkyl von 1 bis 4 C-Atomen, wie Methyl und Ethyl;
- $G^2$ ist Phenylen, das durch 1 oder 2 Substituenten aus der Gruppe Alkyl von 1 bis 4 C-Atomen, wie Ethyl und Methyl, Halogen, wie Chlor und Brom, Carboxy und Sulfo substituiert sein kann, beispielsweise Sulfophenylen, oder ist Alkylen von 2 bis 6 C-Atomen, wie Ethylen;
- Z ist die faserreaktive Gruppe der Formel (2);
- a ist eine Zahl von Null bis 3,
- b ist eine Zahl von Null bis 3 und
- c ist eine Zahl von 1 bis 2,

wobei die Summe von (a + b + c) gleich einer Zahl von 2 bis 4 ist.

Erfindungsgemäße Kupferformazanfarbstoffe sind insbesondere diejenigen, die der allgemeinen Formel (16)

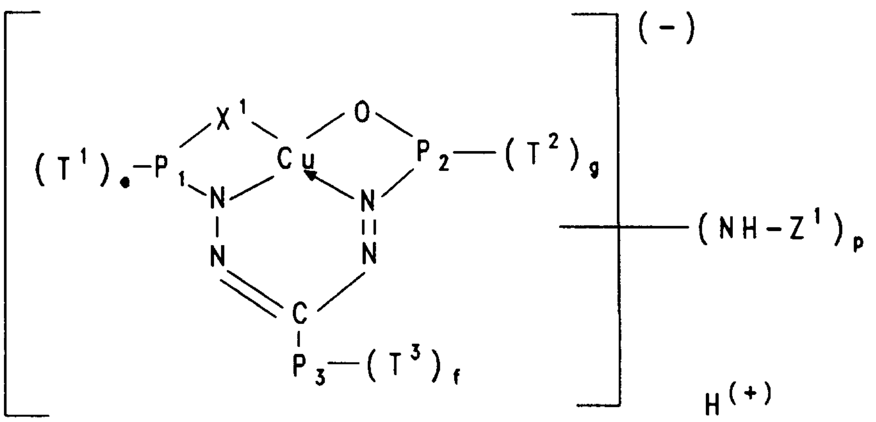

(16)

entsprechen, in welcher bedeuten:

- $X^1$ ist ein Sauerstoffatom oder bevorzugt die Carbonyloxygruppe der Formel -COO- ;
- $P_1$ und $P_2$ bedeuten, unabhängig voneinander, jedes einen Benzol- oder Naphthalinring, wobei an $P_1$ das Stickstoffatom und die Gruppe $X^1$ orthoständig zueinander und an $P_2$ das Sauerstoffatom und das Stickstoffatom ortho-ständig zueinander gebunden sind und die Benzolkerne bzw. Napthalinkerne noch durch einen oder zwei Substituenten aus der Gruppe Halogen, wie Chlor, Nitro, Alkyl von 1 bis 4 C-Atomen, wie Methyl und Ethyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl $P_1$ als auch $P_2$ beide bevorzugt einen Benzolring bedeuten;
- $P_3$ ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können, wobei $P_3$ bevorzugt ein Benzolring ist;
- $T^1$, $T^2$ und $T^3$ bedeuten, unabhängig voneinander, jedes eine Sulfo- oder Carboxygruppe, bevorzugt Sulfogruppe;
- e, f und g stellen, unabhängig voneinander, jedes die Zahl Null, 1 oder 2 dar, wobei die Summe von (e + f + g) eine ganze Zahl von 1 bis 4 bedeutet und vorzugsweise 2 oder 3, insbesondere 2, ist, wobei im Falle von e oder f oder g gleich Null die Gruppe $T^1$ bzw. $T^2$ bzw. $T^3$ ein Wasserstoffatom bedeutet;
- p steht für die Zahl 1 oder 2, bevorzugt 1, wobei die Gruppe - NH-$Z^1$ an einen aromatischen Rest von $P_1$, $P_2$ oder $P_3$ gebunden sein kann und bevorzugt an $P_2$ gebunden ist.

Bevorzugt sind von den Kupferformazanfarbstoffen der allgemeinen Formel (16) diejenigen, in welchen $P_1$ und $P_2$ beide für einen Benzolring stehen, die Gruppe -NH-$Z^1$ an $P_2$ gebunden ist und $T^1$ und $T^2$ jedes eine Sulfogruppe bedeutet, wobei e und g beide für die Zahl 1 stehen. Sofern die Gruppe -NH-$Z^1$ an $P_1$

gebunden ist, ist e die Zahl Null, g die Zahl 2 und $T^2$ eine Sulfogruppe. Bevorzugt ist weiterhin die Gruppierung $-P_3-(T^3)_f$ der Phenyl- oder ein 2-oder 4-Sulfo-phenyl-Rest.

Die vorliegende Erfindung betrifft weiterhin Verfahren zur Herstellung der erfindungsgemäßen Farbstoffe der allgemeinen Formel (1). Sie lassen sich in an und für sich in üblicher Weise analog bekannten, für die jeweiligen Farbstoffklasse spezifischen Synthesewegen herstellen, indem man für den jeweiligen Farbstoff typische Vorprodukte, von denen mindestens eines eine Gruppe der allgemeinen Formel (2) enthält, miteinander umsetzt, oder indem man von einer aminogruppenhaltigen Ausgangsverbindung der allgemeinen Formel (20)

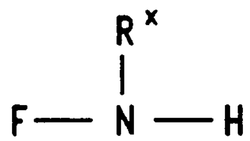

(20)

in welcher F und $R^X$ die obengenannten Bedeutungen haben, ausgeht und diese mit einer Halogen-pyrimidin-carbonsäureamid-Verbindung der allgemeinen Formel (21)

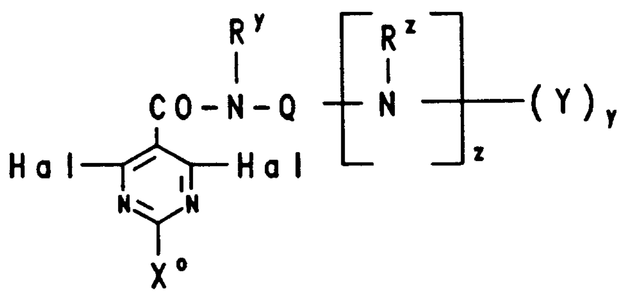

(21)

in welcher Hal, X°, $R^y$, $R^z$, Q, y, z und Y die obengenannten Bedeutungen haben, umsetzt.

Die Umsetzung der Ausgangsverbindungen der allgemeinen Formel (20) und (21) erfolgt im wäßrigen oder wäßrig-organischen Medium in Suspension oder Lösung. Führt man die Umsetzungen in einem wäßrig-organischen Medium durch, so ist das organische Medium beispielsweise Aceton, Dimethylformamid, Dimethylsulfoxid oder N-Methyl-pyrrolidon. Vorteilhaft wird der bei der Kondensation freiwerdende Halogenwasserstoff laufend durch Zugabe wäßriger Alkalihydroxide, -carbonate oder -bicarbonate neutralisiert.

Die Umsetzung der Verbindungen der allgemeinen Formel (20) mit einer Verbindung der allgemeinen Formel (21) wird in der Regel bei einem pH-Wert zwischen 2 und 7, bevorzugt zwischen 3 und 5, und bei einer Temperatur zwischen 30 und 100 ° C, bevorzugt zwischen 40 und 80 ° C, durchgeführt.

Die Halogeno-pyrimidin-carbonsäureamid-Verbindungen der allgemeinen Formel (21) lassen sich aus den Trihalogeno-pyrimidin-4-carbonsäurehalogeniden der allgemeinen Formel (22)

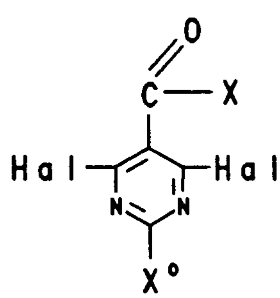

(22)

in welcher Hal und X° die obengenannten Bedeutungen haben und X für Brom oder bevorzugt Chlor steht, und einer Aminoverbindung der allgemeinen Formel (23)

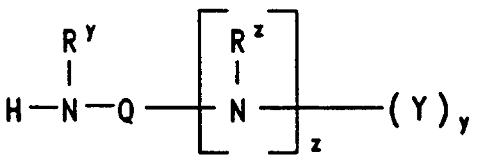

(23)

in welcher $R^y$, $R^z$, Q, y, z und Y die obengenannten Bedeutungen haben, analog bekannten Verfahrensweisen der Umsetzung von Carbonsäurehalogeniden mit Aminen herstellen, so, wie für die oben angegebenen Umsetzungen erwähnt, in einem wäßrigen oder wäßrigorganischen Medium bei einem pH-Wert zwischen 2 und 11, bevorzugt zwischen 3 und 9, und bei einer Temperatur zwischen 0 und 30 °C, bevorzugt zwischen 5 und 20 °C.

Die Halogeno-pyrimidin-carbonsäurehalogenid-Verbindungender allgemeinen Formel (22) sind teilweise bekannt; ihre Herstellung ist in der deutschen Offenlegungsschrift 29 29 594 beschrieben. Solche Ausgangsverbindungen sind beispielsweise 2,4-Dichlor-6-fluor-pyrimidin-5-carbonsäurefluorid, 4,6-Dichlor-2-fluor-pyrimidin-5-carbonsäurefluorid, 2,4,6-Trichlor-pyrimidin-5-carbonsäurefluorid, 4-Chlor-2,6-difluor-pyrimidin-5-carbonsäurefluorid, 2-Chlor-4,6-difluor-pyrimidin-5-carbonsäurefluorid, 2,4,6-Trifluor-pyrimidin-5-carbonsäurefluorid und insbesondere 2,4,6-Trichlor-pyrimidin-5-carbonsäurechlorid.

Ausgangsverbindungen der allgemeinen Formel (20) sind beispielsweise:
6-Amino-1-hydroxy-2-(2'-sulfophenylazo)-naphthalin-3-sulfonsäure, 6-Methylamino-1-hydroxy-2-(4'-acetylamino-2'-sulfo-phenylazo)-naphthalin-3-sulfonsäure, 8-Amino-1-hydroxy-2-(2'-sulfo-phenylazo)-naphthalin-3,6-disulfonsäure, 8-Amino-1-hydroxy-2-(4'-chlor-2'-sulfo-phenylazo)-naphthalin-3,5-disulfonsäure, 7-Amino-2-(2',5'-disulfo-phenylazo-)-1-hydroxynaphthalin-3-sulfonsäure, 7-Methylamino-2-(2'-sulfo-phenylazo)-1-hydroxynaphthalin-3-sulfonsäure, 7-Methylamino-2-(4'-methoxy-2'-sulfo-phenylazo)-1-hydroxynaphthalin-3-sulfonsäure, 8-(3'-Aminobenzoylamino)-1-hydroxy-2-(2'-sulfo-phenylazo)-naphthalin-3,6-disulfonsäure, 8-Amino-1-hydroxy-2,2'-azonaphthalin-1',3,5',6-tetrasulfonsäure, 8-Amino-1-hydroxy-2,2'-azonaphthalin-1'3,5'-trisulfonsäure, 6-Amino-1-hydroxy-2,2'-azonaphthalin-1'3,5'-trisulfonsäure, 6-Methylamino-1-hydroxy-2,2'-azonaphthalin-1'3,5'-trisulfonsäure, 7-Amino-1-hydroxy-2,2'-azonaphthalin-1',3-disulfonsäure, 8-Amino-1-hydroxy-2-(4'-methyl-2'-sulfo-phenylazo)-naphthalin-3,6-disulfonsäure, 6-Amino-1-hydroxy-2-(2'-methyl-2'-sulfo-phenylazo)-naphthalin-3,5-disulfonsäure, 8-Amino-1-hydroxy-2-[4'-(2"-sulfo-phenylazo)-2'-methoxy-5'-methylphenylazo]-naphthalin-3,6-disulfonsäure, 8-Amino-1-hydroxy-2-[4'-(4"-methoxy-phenylazo)-2'-carboxy-phenylazo]-naphthalin-3,6-disulfonsäure, 8-Amino-1-hydroxy-2-[4'-(2"-hydroxy-3",6"-disulfo-1"-naphthylazo)-2'-carboxyphenylazo]-naphthalin-3,6-disulfonsäure, 4,4'-Bis-(8"-amino-1"-hydroxy-3",6"-disulfo-2"-naphthylazo)-3,3'-dimethoxydiphenyl, 6-Amino-1-hydroxy-2-[4'-(2"-sulfo-phenylazo)-2'-methoy-5'-methyl-phenylazo]-naphthalin-3,5-disulfonsäure, 2-(4'-Amino-2'-methyl-phenylazo)-naphthalin-4,8-disulfonsäure, 2-(4'-Amino-2'-acetylamino-phenylazo)-naphthalin-5,7-disulfonsäure, 4-Nitro-4'-(4"-methylamino-phenylazo)-stilben-2,2'-disulfonsäure, 4-Nitro-4'-(4"-amino-2"-methyl-5"-methoxy-phenylazo)-stilben-2,2'-disulfonsäure, 4-Amino-4'(4"-methoxy-phenylazo)-stilben-2,2'-disulfonsäure, 4-Amino-2-methyl-azobenzol-2',5'-disulfonsäure, 1-(2',5'-Dichlor-4'-sulfo-phenyl)-3-methyl-4-(3"-amino-6"-sulfo-phenylazo)-5-pyrazolon, 1-(4'-Sulfo-phenyl)-3-carboxy-4-(4"-amino-2"-sulfo-phenylazo)-5-pyrazolon, 1-(2'-Methyl-5'-sulfo-phenyl)-3-methyl-4-(4"-amino-2"-sulfophenylazo)-5-pyrazolon, 1-(2'-Sulfophenyl)-3-methyl-4-(3"-amino-6"-sulfo-phenylazo)-5-pyrazolon, 4-Amino-4'-(3"-methyl-1"-phenyl-4"-pyrazol-5"-onyl-azo)-stilben-2,2'-disulfonsäure, 4-Amino-4'-(2"-hydroxy-3",6"-disulfo-1"-naphthylazo)-stilben-2,2'-disulfonsäure, 8-Acetylamino-1-hydroxy-2-(3'-amino-6'-sulfo-phenylazo)-naphthalin-3,6-disulfonsäure, 7-(3'-Sulfo-phenylamino)-1-hydroxy-2-(4"-amino-2"-carboxy-phenylazo)-naphthalin-3-sulfonsäure, 8-Phenylamino-1-hydroxy-2-(4'-amino-2'-sulfo-phenylazo)-naphthalin-3,6-disulfonsäure, 6-Acetylamino-1-hydroxy-2-(3'-amino-6'-sulfo-phenylazo)-naphthalin-3-sulfonsäure, 1-(3'-Aminophenyl)-3-methyl-4-(2",5"-disulfo-phenylazo)-5-pyrazolon, 1-(3'-Aminophenyl)-3-carboxy-4-(2"-carboxy-4"-sulfo-phenylazo)-5-pyrazolon, 4-Amino-4'-[3"-methyl-4"-(2"',5"'-disulfophenylazo)-1"-pyrazol-5"-onyl]-stilben-2,2'-disulfonsäure und 1-(3'-Aminophenyl)-3-carboxy-4-[4"-(2"',5"'-disulfo-phenylazo)-2"-methoxy-5"-methylphenylazo]-5-pyrazolon, der Kupferkomplex von 8-Amino-1 -hydroxy-2-(2'-hydroxy-5'-sulfo-phenylazo)-naphthalin-3,6-disulfonsäure, von 6-Amino-1-hydroxy-2-(2'-hydroxy-5'-sulfo-phenylazo)-naphthalin-3-sulfonsäure, von 6-Amino-1-hydroxy-2-(2'-hydroxy-5'-sulfo-phenylazo)-naphthalin-3,5-disulfonsäure, von 8-Amino-1-hydroxy-2-(2'-hydroxy-3'-chlor-5'-sulfo-phenylazo)-naphthalin-3,6-disulfonsäure, von 6-Methylamino-1-hydroxy-2-(2'-carboxy-5'-sulfo-phenylazo)-naphthalin-3-sulfonsäure, von 8-Amino-1-hydroxy-2-[4'-(2"-sulfo-phenylazo)-2'-methoxy-5'-methyl-phenylazo]-naphthalin-3,6-disulfonsäure, von 6-Amino-1-hydroxy-2-[4'-(2",5"-disulfo-phenylazo)-2'-methoxy-5'-methyl-phenylazo]-naphthalin-3,5-disulfonsäure, von 1-(3'-Amino-4'-sulfophenyl)-3-methyl-4-[4"-(2"',5"'-disulfo-phenylazo)-2"-methoxy-5"-methyl-phenylazo]-5-pyrazolon, von 7-(4'-Amino-3'-sulfo-anilino)-1-hydroxy-2-[4"-(2"', 5"'-disulfo-phenylazo)-2"-methoxy-5"-methyl-phenylazo]-naphthalin-3-sulfonsäure und von 6-(4'-Amino-3'-sulfo-anilino)-1-hydroxy-2-(2''-carboxyphenylazo)-naphthalin-3-sulfonsäure, der 1:2-Chromkomplex von 7-Amino-6'-nitro-1,2'-dihydroxy-2,1'-azonapthalin-3,4'-disulfonsäure, von 6-Amino-1-hydroxy-2-(2'-carboxy-phenylazo)-naphthalin-3-sulfonsäure, von 8-Amino-1-hydroxy-2-(4'-nitro-2'-hydroxy-phenylazo)-naphthalin-3,6-disulfonsäure, von 1-(3'-Amino-4'-sulfophenyl)-3-methyl-4-(2''-hydroxy-4''-sulfo-1''-naphthylazo)-5-pyrazolon und von 7-(4'-Sulfo-anilino)-1-hydroxy-2-(4''-amino-2''-carboxyphenylazo)-naphthalin-3-sulfonsäure, der 1:2-Kobaltkomplex von 6-(4'-Amino-3'-sulfo-anilino)-1-hydroxy-2-(5''-chlor-2''-hydroxy-phenylazo)-naphthalin-3-sulfonsäure,
die Kupferformazanverbindungen von
N-(2-Carboxy-4-sulfophenyl)-N'-(2'-hydroxy-3'-amino-5'-sulfophenyl)-ms-phenylformazan, N-(2-Carboxy-4-sulfophenyl)-N'-(2'-hydroxy-5'-amino-3'-sulfophenyl)-ms-phenyl-formazan, N-(2-Carboxy-5-sulfophenyl)-N'-(2'-hydroxy-5'-amino-3'-sulfophenyl)-ms-(4''-sulfophenyl)-formazan, N-(2-Carboxy-4-sulfophenyl)-N'-(2'-hydroxy-5'-amino-3'-sulfophenyl)-ms-(4''-sulfophenyl)-formazan, N-(2-Carboxy-5-sulfophenyl)-N'-(2'-hydroxy-3'-amino-5'-sulfophenyl)-ms-(4''-methoxyphenyl)-formazan, N-(2-Carboy-4-sulfophenyl)-N'-hydroxy-3'-amino-5'-sulfophenyl)-ms-(2''-chlor-5''-sulfophenyl)-formazan, N-(2-Carboxy-4-aminophenyl)-N'-(2'-hydroxy-3',5'-disulfonylphenyl)-ms-(3''-sulfophenyl)-formazan, N-(2-Carboxy-4-aminophenyl)-N'-(2'-hydroxy-3',5'-disulfonylphenyl)-ms-(2''-sulfophenyl)-formazan, N-(2-Carboxy-4-aminophenyl)-N'-(2'-hydroxy-5'-methylsulfonyl-3'-sulfophenyl)-ms-(2''-sulfophenyl)-formazan, N-(2-Carboxy-5-sulfophenyl)-N'-(2'-hydroxy-3',5'-disulfophenyl)-ms-(3''-aminophenyl)-formazan, N-(2-Carboxy-5-sulfophenyl)-N'-(2'-hydroxy-4'-methylsulfophenyl-6'-sulfophenyl)-ms-(3''-aminophenyl)-formazan, N-(2-Carboxy-4-aminophenyl)-N'-(2'-hydroxy-4'-sulfonaphth-1'-yl)-ms-(2''-sulfophenyl)-formazan, N-(2-Hydroxy-3-amino-5-sulfophenyl)-N'-(2'-hydroxy-4'-sulfophenyl)-ms-(2''-sulfophenyl)-formazan, N-(2-Hydroxy-3-amino-5-sulfophenyl)-N'-(2'-hydroxy-3',5'-disulfophenyl)-ms-phenyl-formazan, N-(2-Hydroxy-5-sulfophenyl)-N'-(2'-hydroxy-3',5'-disulfophenyl)-ms-(4''-aminophenyl)-formazan, N-(2-Hydroxy-3-amino-5-sulfophenyl)-N'-(2'-hydroxy-3',5'-disulfophenyl)-ms-phenyl-formazan, N-(2-Hydroxy-3-amino-5-sulfophenyl)-N'-(2'-hydroxy-3',5'-disulfophenyl)-ms-(4''-sulfophenyl-formazan, N-(2-Hydroxy-5-amino-3-sulfophenyl)-N'-(2',5'-disulfophenyl)-ms-phenyl-formazan, N-(2-Hydroxy-4,6-disulfophenyl)-N'-(2',4'-disulfophenyl)-ms-(3''-aminophenyl)-formazan und von N-(2-Hydroxy-4-sulfophenyl)-N'-(4'-amino-2'-sulfophenyl)-ms-(4''-chlor-3''-sulfophenyl)-formazan, die Aminoanthrachinon-Verbindungen 1-Amino-4-(3'-amino-2',4',6'-trimethylphenylamino)-anthrachinon-2,5'-disulfonsäure, 1-Amino-4-(2',6'-dimethyl-3'-aminomethylphenylamino)-anthrachinon-2,5'-disulfonsäure, 1-Amino-4-(4'-methyl-2'-aminomethylphenylamino)-anthrachinon-2,6'-disulfonsäure, 1-Amino-4-(5'-amino-phenylamino)-anthrachinon-2,2',4'-trisulfonsäure, 1-Amino-4-(4'-amino-phenylamino)-anthrachinon-2,3'-disulfonsäure, 1-Amino-4-(4'-amino-phenylamino)-anthrachinon-2,2'-disulfonsäure, 1-Amino-4-(3'-amino-phenylamino)-anthrachinon-2,4'-disulfonsäure, 1-Amino-4-(2'-methyl-3'-amino-phenylamino)-anthrachinon-2,5'-disulfonsäure, 1-Amino-4-(2'-methyl-3'-amino-phenylamino)-anthrachinon-2,6,5'-trisulfonsäure, 1-Amino-4-(5'-aminomethyl-phenylamino)-anthrachinon-2,2',4'-trisulfonsäure, 1-Amino-4-(4'-amino-cyclohexylamino)-anthrachinon-2,6-disulfonsäure,1 Amino-4-(4'-amino-cyclohexylamino)-anthrachinon-2-sulfonsäure, 1-Amino-4-(3'-amino-4'-methyl-cyclohexylamino)-anthrachinon-2-sulfonsäure, 1-Amino-4-(3'-amino-2'-methyl-cyclohexyamino)-anthrachinon-2-sulfonsäure, 1-Amino-4-(4'-amino-3'-methyl-cyclohexylamino)-anthrachinon-2-sulfonsäure, 1-Amino-4-(4'-aminomethyl-cyclohexyl-amino)-anthrachinon-2-sulfonsäure, 1-Amino-4-(3'-aminomethyl-cyclohexyl-amino)-anthrachinon-2-sulfonsäure, 1-Amino-4-(2'-amino-ethylamino)-anthrachinon-2-sulfonsäure, 1-Amino-4-(2'-methylamino-ethylamino)-anthrachinon-2-sulfonsäure, 1-Amino-4-(3'-amino-1-propylamino)-anthrachinon-2-sulfonsäure, 1-Amino-4-(3'-methylamino-1-propylamino)-anthrachinon-2-sulfonsäure und 1-Amino-4-(4'-amino-1-butylamino)-anthrachinon-2-sulfonsäure,
die Triphendioxazinverbindungen der allgemeinen Formel (24)

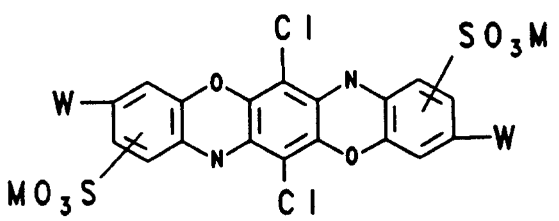

(24)

in welcher M eine der obengenannten Bedeutungen hat und W 3-Amino-propylamino, 2-Amino-2-methyl-ethylamino, 4-Amino-butylamino, 5-Amino-pentylamino, 6-Amino-hexylamino, 4-Amino-cyclohexylamino, N-Piperazinyl, 3-Amino-2-sulfato-propylamino, 2-[(N-Acetyl)-N-(2'-amino-ethyl)-amino]-ethylamino, 2-(2'-Amino-ethoxy)-ethylamino oder N-Methyl-(2-N'-methyl-amino)-ethylamino bedeutet sowie die aminogruppenhaltigen Kupfer- und Nickelphthalocyanin-Verbindungen (vorzugsweise in Form ihrer Salze) der nachstehenden Formeln (in welchen Pc für den Kupferphthalocyanin- oder Nickelphthalocyanin-Rest steht):

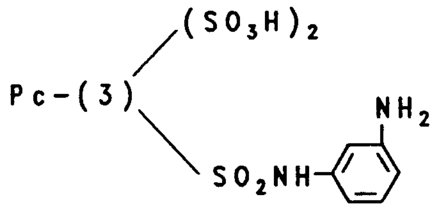

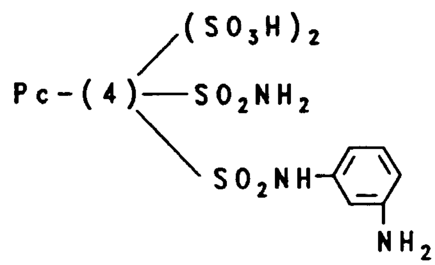

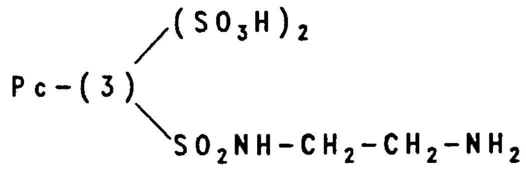

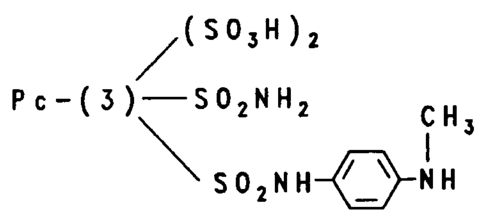

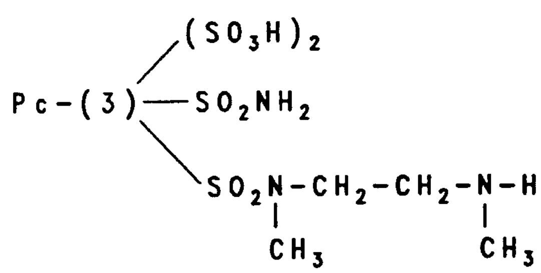

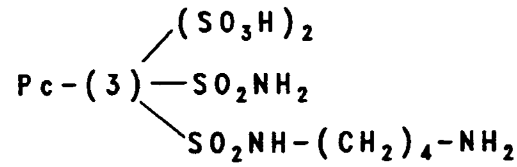

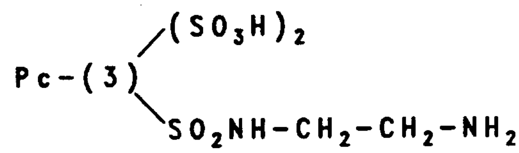

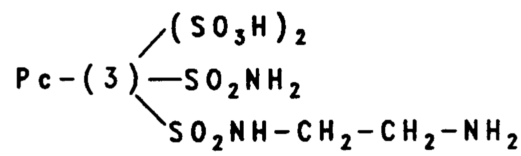

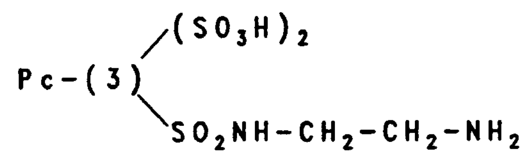

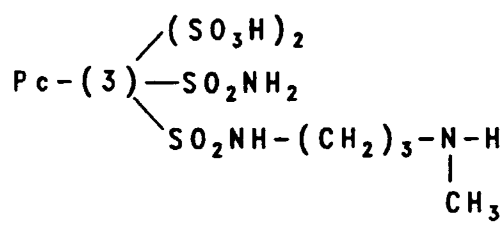

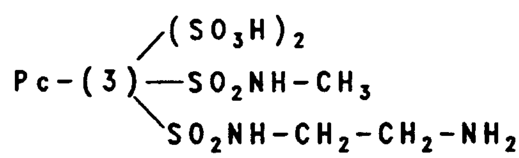

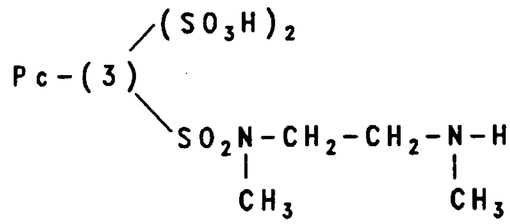

Aromatische Amine, die als Diazokomponenten zur Synthese der erfindungsgemäßen Azofarbstoffe der allgemeinen Formel (1) dienen und den allgemeinen Formeln D-$NH_2$ bzw. $D_1$-$NH_2$ entsprechen, sind

beispielsweise: 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminodiphenyl, 1-Aminobenzol-2-, -3- oder -4-carbonsäure, 2-Aminodiphenylether, 1-Aminobenzol-2-, -3- oder -4-sulfonsäureamid, -N-methylamid, -N-ethylamid, -N,N-dimethylamid oder -N,N-diethylamid, Dehydrothio-p-toluidin-sulfonsäure, 1-Amino-3-trifluormethyl-benzol-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4-- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2-Aminonaphthalin-1 ,5-, - 1,7-, - 3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazabenzol-3,4'-disulfonsäure, 3-Methoxy-4-amino-6-methylazobenzol-2',4'-disulfonsäure und 3-Methoxy-4-amino-6-methylazobenzol-2',5'-disulfonsäure.

Ausgangsverbindungen, die zur Herstellung von erfindungsgemäßen Disazofarbstoffen der allgemeinen Formel (1) zunächst als Kupplungskomponente und sodann, in Form der gebildeten Amino-Azoverbindung, als Diazokomponente dienen und der allgemeinen Formel H-E-$NH_2$ entsprechen, sind beispielsweise 3-Methyl-anilin, 2-Methoxy-5-methyl-anilin, 2,5-Dimethyl-anilin, 3-Ureido-anilin, 3-Acetylamino-anilin, 3-(Hydroxyacetylamino)-anilin, 1,3-Diaminobenzol-4-sulfonsäure, 1-Amino-naphthalin-6- oder -8-sulfonsäure, 1-Amino-2-methoxynaphthalin-6-sulfonsäure, 2-Amino-5-hydroxy-naphthalin-7-sulfonsäure, 2-Amino-5-hydroxy-naphthalin-1,7-disulfonsäure und 2-Amino-8-hydroxynaphthalin-6-sulfonsäure.

Ausgangsverbindungen zur Herstellung der erfindungsgemäßen Azoverbindungen der allgemeinen Formel (1), die als Kupplungskomponenten dienen und den allgemeinen Formeln H-K bzw. H-$K_1$ oder den Formeln H-K-N($R^x$)H bzw. H-$K_2$-N($R^x$)H entsprechen, sind beispielsweise:
Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- und 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-bzw. -4,6-disulfonsäure, 1-Acetylamino-8-hydroxynaphthalin-3,6- und -4,6-disulfonsäure (1-(4'-Aminobenzoylamino)-8-hydroxynaphthalin-3,6- bzw. -4,6-disulfonsäure, 1-(4'-Nitrobenzoylamino)-8-hydroxynaphthalin-3,6-bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2']-3-methyl-5-pyrazolon, 1-(5',7'-Disulfonaphthyl-[2']-3-methyl-5-pyrazolon, 1-(2',5'-Dichlor-4'-sulfophenyl)-3-methyl-5-pyrazolon, 3-Aminocarbonyl-4-methyl-6-hydroxypyridon-2, 1-Ethyl-3-cyan- oder -3-chlor-4-methyl-6-hydroxypyridon-2, 1-Ethyl-3-sulfomethyl-4-methyl-6-hydroxypyridon-2,2,4,6-Triamino-3-cyanpyridin, 2-(3'-Sulfophenylamino)-4,6-diamino-3-cyanpyridin, 2-(2'-hydroxyethylamino-3-cyan-4-methyl-6-aminopyridin, 2,6-Bis-(2'-hydroxyethylamino)-3-cyan-4-methylpyridin, 1-Ethyl-3-carbamoyl-4-methyl-6-hydroxypyridon-(2), 1-Ethyl-3-sulfomethyl-4-methyl-5-carbamoyl-6-hydroxypyridon-(2),N-Acetoacetylaminobenzol, 1-(N-Acetoacetylamono)-2-methoxybenzol-5-sulfonsäure, 4-Hydroxychinolon-(2), 1-Amino-8-hydroxy-7-(phenylazo)-naphthalin-3,6-disulfonsäure, 1-Amino-8-hydroxy-7-(4'-sulfophenylazo)-naphthalin-3,6-disulfonsäure und 1-Amino-8-hydroxy-7-(2',5'-disulfophenylazo)napthalin-3,6-disulfonsäure.

Amino-Ausgangsverbindungen der allgemeinen Formel (23) sind beispielsweise:
1-Aminobenzol-2-, -3- oder -4-β-sulfatoethylsulfon, 1-Aminobenzol-3-β-phosphatoethylsulfon, 1-Amino-4-methylbenzol-3-β-sulfatoethylsulfon, 1-Aminobenzol-3-β-chlorethylsulfon, 1-Amino-4-methoxybenzol-3-β-sulfoethylsulfon, 1-Aminobenzol-4-β-sulfatoethylsulfon-2-sulfonsäure, 1-Aminobenzol-5-β-sulfatoethylsulfon-2-sulfonsäure, 1-Aminobenzol-5-β-sulfatoethylsulfon-2,4-disulfonsäure, 1-Aminonaphthalin-4-β-sulfatoethylsulfon, 1-amino-2,5-dimethoxybenzol-4-β-sulfatoethylsulfon, 1-Aminobenzol-4-β-sulfatoethylsulfon-2-carbonsäure, 1-Aminobenzol-5-β-sulfatoethylsulfon-2-carbonsäure, 1-Amino-2-methoxybenzol-4-β-sulfatoethylsulfon, 1-Amino-2-chlorbenzol-4-β-sulfatoethylsulfon, 1-Amino-2-methoxybenzol-5-β-sulfatoethylsulfon, 2-Aminonaphthalin-8-β-sulfatoethylsulfon, 2-Aminonaphthalin-8-β-sulfatoethylsulfon-6-sulfonsäure, 1-Amino-2,5-dimethoxybenzol-4-vinylsulfon, 1-Amino-2-methoxy-5-methoxybenzol-4-β-sulfatoethylsulfon,1-Amino-2,5-diethoxybenzol-4-β-sulfatoethylsulfon, 1-Amino-2-brombenzol-4-β-sulfatoethylsulfon, 1-Amino-2-brombenzol-4-vinylsulfon, 1-Aminobenzol-5-vinylsulfon-2,4-disulfonsäure, 1-Aminobenzol-5-β-phosphatoethylsulfon-2,4-disulfonsäure, 1-Aminobenzol-5-β-chlorethylsulfon-2,4-disulfonsäure, 2-Aminonaphthalin-8-β-phosphatoethylsulfon-6-sulfonsäure, 2-Aminonaphthalin-8-vinylsulfon-6-sulfonsäure, 1-Amino-2-methoxy-5-methylbenzol-4-β-chlorethylsulfon, 2-Aminophenyl-4-β-sulfatoethylsulfon, 1-Aminobenzol-3- oder -4-vinylsulfon, 1-Amino-2-hydroxybenzol-4-β-sulfatoethylsulfon, 1-Aminobenzol-5-vinylsulfon-2-sulfonsäure, 3-(N-Methyl-β-sulfatoethylsulfonylamino)-1-aminobenzol, 3-(N-Ethyl-β-sulfatoethylsulfonylamino)-1-aminobenzol, 3-β-Sulfatoethylsulfonylamino-1-aminobenzol, β-(β'-Chlorethylsulfonyl)-ethylamin, γ-(β'-Chlorethylsulfonyl)-propylamin, γ-(β'-Sulfatoethylsulfonyl)-propylamin, β-[β'-(β''-Chlorethylsulfonyl)-ethoxy]-ethylamin, β-[β'-(β''-Sulfatoethylsulfonyl)-ethoxy]-ethylamin, 8-(β-Sulfatoethylsulfonyl)-6-sulfo-2-aminonaphthalin, 3- oder 4-{β-[β'-Sulfatoethylsulfonyl)-phen]-ethylamino}-anilin, 3- oder 4-{β-[2'-Sulfo-4'-(β'-sulfatoethylsulfonyl)-phen]-ethylamino}-anilin, 3- oder 4-[β-(β'-Chlorethylsulfonyl)-ethylamino]-anilin, 3- oder 4-[β-(β'-Sulfatoethylsulfonyl)-ethylamino]-anilin, 3- oder 4-[β-(Vinylsulfonyl)-ethylamino]-anilin, 3- oder 4-[γ-(β'-Chlorethylsulfonyl)-propylamino]-anilin, 3- oder 4-[γ-(β'-Sulfatoethylsulfonyl)-propylamino]-anilin, 3- oder 4-[γ-(Vinylsulfonyl)-propylamino]-anilin, 3,4-Di-(β-sulfatoethylsulfonyl)-anilin, 2,5-Di-(β-sulfatoethylsulfonyl)-anilin, 4-[γ-(β'-Sulfatoethylsulfonyl)-propoxy]-anilin, 2,5-Bis-[(β-sulfatoethylsulfonyl)-methyl]-anilin, 3- oder 4-{N-[γ-(β'-Sulfato-ethylsulfonyl)-propyl-amidocarbonyl]}-anilin, 3,5-Bis-{N-[γ-(β'-sulfatoethylsulfonyl)-propyl-amidocarbonyl]}-anilin, 3-Sulfo-4-{[N-γ-(β'-sulfatoethylsulfonyl)-propyl-amidocarbonyl]-methoxy}-anilin und 4-{[N-γ-(β'-Sulfatoethylsulfonyl)-propyl-amidocarbonyl]-methoxy}-anilin.

Geht man bei der erfindungsgemäßen Synthese der Azofarbstoffe von Diazo-oder Kupplungskomponenten aus, die bereits die Gruppe der allgemeinen Formel (3) enthalten, erfolgen die Umsetzungen in der üblichen Verfahrensweise der Diazotierungs- und Kupplungsreaktionen, so die Diazotierung in der Regel bei einer Temperatur zwischen -5 °C und + 15 °C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25 °C, ebenso bevorzugt in wäßrigem Medium.

Bei der erfindungsgemäßen Synthese von Schwermetallkomplex-Azofarbstoffen, beispielsweise solchen entsprechend der allgemeinen Formel (3j), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält, wobei die schwermetallfreien Ausgangs-Azoverbindungen zudem einen Acylaminorest gebunden enthalten können, wie einen Acetylaminorest. Beispielsweise kann man bei der Synthese der Kupferkomplex-Azofarbstoffe der Formel (4j) von einer Ausgangsverbindung entsprechend der allgemeinen Formel (25)

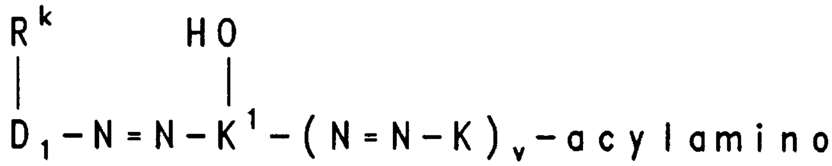

(25)

ausgehen, in welcher $D_1$, K, $K^1$ und v eine der obengenannten Bedeutungen haben und $R^k$ ein Wasserstoffatom oder eine in ortho-Stellung zur Azogruppe an $D_1$ gebundene Hydroxy- oder Methoxygruppe ist, und diese acylaminogruppenhaltige Ausgangs-Azoverbindung analog bekannten und üblichen Verfahrensweisen mit einem kupferabgebenden Mittel, wie einem Kupfersalz, umsetzen. Ist $R^k$ ein Wasserstoffatom oder eine Methoxygruppe, so kann man die Verbindung (25) einer auf üblichen Wege durchzuführenden oxidativen oder entalkylierenden Kupferungsreaktion unterwerfen. Die nun erhaltene Kupferkomplex-Azoverbindung mit der Acylaminogruppe kann sodann analog bekannten Verfahrensweisen nach oder unter Hydrolyse der Acylaminogruppe zur Aminogruppe mit einer Verbindung der Formel (21) oder (24) zu dem erfindungsgemäßen Farbstoff der allgemeinen Formel (1) umgesetzt werden.

Die Farbstoffe der allgemeinen Formel (1) - im nachfolgenden Farbstoffe (1) genannt - eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die Farbstoffe (1) lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz von eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur, wie beispielsweise in den anfangs genannten Druckschriften, beschrieben.

Gegenstand der vorliegenden Erfindung ist deshalb auch die Verwendung der Farbstoffe (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff (1) als Farbmittel eingesetzt wird, indem man den Farbstoff (1) im wäßrigen Medium auf das Material appliziert und ihn mittels Wärme oder mittels einer alkalisch wirkenden Verbindung oder mittels beidem auf dem Material fixiert.

Falls erfindungsgemäße Anthrachinonfarbstoffe eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen, z.B. einem Naphthalinsulfonsäure-Formaldehyd-Kondensat oder insbesondere Anthrachinon-2-sulfonsäure, behoben werden.

Die Farbstoffe (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den Farbstoffen (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit,

Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säure angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel A

Eine Lösung von 12,35 Teilen Trichlorpyrimidin-5-carbonsäurechlorid in 200 Vol.-Teilen Aceton wird bei 0 °C in eine Suspension von 12,12 Teilen $\gamma$-($\beta$-Sulfatoethylsulfonyl)-propylamin in 250 Vol.-Teilen Aceton eingerührt. Die Umsetzung erfolgt bei 5 bis 10 °C unter Einhaltung eines pH-Wertes von 6,5 mittels 15 %iger wäßriger Natriumcarbonatlösung. Die so erhaltene Trichlorpyrimidin-5-carbonsäureamid-Verbindung der Formel

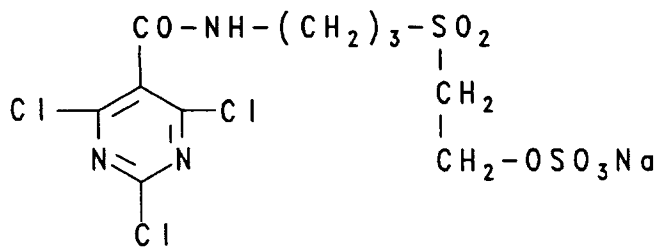

wird durch Eindampfen der Lösung unter reduziertem Druck isoliert. Die Verbindung stellt eine feste Substanz dar; sie wird durch folgende Werte der $^{13}$C-NMR-Spektroskopie in Hexadeutero-dimethylsulfoxid charakterisiert:

$\delta$ (in ppm) = 21,7; 37,9; 51,2; 52,3; 60,0; 129,4; 157,5; 159,4; 160,6. gegenüber Tetramethylsilan als innerem Standard.

Beispiel B

Gemäß den Angaben des Beispieles A kann man analoge Trichlorpyrimidin-5-carbonsäureamid-Verbindungen als erfindungsgemäß einsetzbare Ausgangsverbindungen zur Herstellung von Farbstoffen der allgemeinen Formel (1) erhalten, wenn man anstelle der hier eingesetzten $\gamma$-($\beta$-Sulfatoethylsulfonyl)-propylamin-Ausgangsverbindung ein anderes Amin entsprechend der allgemeinen Formel (23), wie ein im Beschreibungsteil vorliegender Patentanmeldung beschriebenes, wie insbesondere beispielsweise 3-($\beta$-Sulftoethylsulfonyl)-anilin, 4-($\beta$-Sulfatoethylsulfonyl)-anilin, 2-Methoxy-5-($\beta$-sulfatoethylsulfonyl)-anilin, 2-Methoxy-5-methyl-4-($\beta$-sulfatoethylsulfonyl)-anilin, $\beta$-($\beta$-Sulfatoethylsulfonyl)-ethylamin oder $\beta$-($\beta$-Chlorethylsulfonyl)-ethylamin einsetzt.

Beispiel 1

Zu der unter Beispiel A hergestellten Lösung von 2,4,6-Trichlor-5-carbonsäure-N-[$\gamma$-($\beta$'-sulfatoethylsulfonyl)-propyl]-amid gibt man 21 Teile einer auf üblichem Wege durch Kupplung des Diazoniumsalzes von 2-Sulfo-4-methoxy-anilin mit 3-Amino-6-sulfo-8-naphthol hergestellten Amino-Azoverbindung und führt die Umsetzung während drei Stunden bei 60 °C unter Einhaltung eines pH-Wertes von 5 durch. Anschließend isoliert man den hergestellten erfindungsgemäßen Azofarbstoff der Formel (in Form der freien Säure geschrieben)

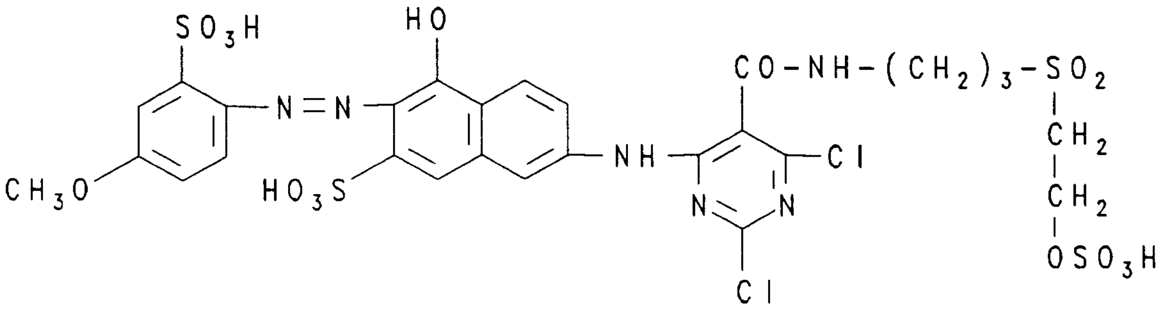

($\lambda_{max}$ = 501 nm)

in üblicher Weise durch Aussalzen mit Natriumchlorid als Alkalimetallsalz (Natriumsalz). Die Bindung der Aminogruppe des Amino-azo-Restes in der 4-Stellung des Pyrimidinrestes wurde durch $^{13}C$-NMR-Spektroskopie gesichert.

Der erfindungsgemäße Azofarbstoff besitzt sehr gute faserreaktive Farbstoffeigenschaften und färbt nach den in der Technik für faserreaktive Farbstoffe üblichen Anwendungsverfahren die in der Beschreibung genannten Materialien, insbesondere Cellulosefasermaterialien, in farbstarken, brillanten scharlachroten Tönen mit guten Echtheitseigenschaften.

Beispiel 2

Zu der gemäß den Angaben des Beispieles A hergestellten Lösung von 2,4,6-Trichlor-5-carbonsäure-N-[γ-(β'-sulfatoethylsulfonyl)-propyl]-amid gibt man 26 Teile der Amino-azo-Ausgangsverbindung 5-(1',5'-Disulfo-naphth-2'-yl)-azo-3-amino-6-sulfo-8-naphthol. Man führt die Umsetzung bei einer Temperatur von 70 °C unter Einhaltung eines pH-Wertes von 5 während 4 Stunden durch. Der erfindungsgemäße Azofarbstoff der Formel (in Form der freien Säure geschrieben)

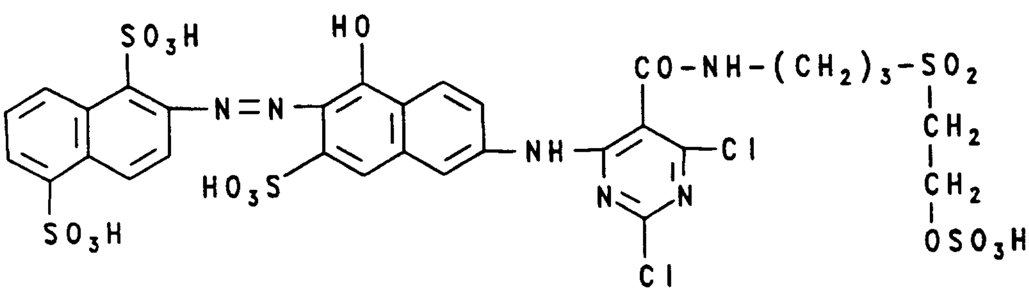

($\lambda_{max}$ = 486 nm)

wird in üblicher Weise durch Aussalzen mittels Natriumchlorid als Natriumsalz isoliert. Er besitzt sehr gute faserreaktive Farbstoffeigenschaften und färbt die in der Beschreibung genannten Fasermaterialien, insbesondere Baumwolle, in farbstarken orangen Tönen mit guten Echtheitseigenschaften.

Beispiele 3 bis 130

In den nachstehenden Tabellenbeispielen sind weitere erfindungsgemäße Farbstoffe entsprechend einer allgemeinen Formel (A)

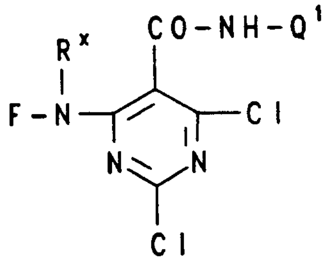

(A)

mit Hilfe ihrer aminogruppenhaltigen Ausgangsverbindungen (einem aminogruppenhaltigen Farbstoffrest entsprechend der allgemeinen Formel (20) und einem Amin der Formel $H_2N-Q^1$ entsprechend der allgemeinen Formel (23)) beschrieben. Sie lassen sich in erfindungsgemäßer Weise, beispielsweise analog den oben angegebenen Ausführungsbeispielen, unter Einsatz von 2,4,6-Trichlor-pyrimidin-5-carbonsäurechlorid, der aus dem jeweiligen Tabellenbeispiel ersichtlichen Amino-Ausgangsverbindung entsprechend der allgemeinen Formel (20) und der Aminoverbindung entsprechend der allgemeinen Formel $H_2N-Q^1$ herstellen (die aminogruppenhaltigen Mono- und Disazofarbstoffe als Ausgangsverbindung der allgemeinen Formel (20) sind in der Tabelle in Form der üblichen Charakterisierung durch ihre Diazo- und Kupplungskomponenten dargestellt). Diese neuen Farbstoffe besitzen sehr gute faserreaktive Farbstoffeigenschaften und färben die in der Beschreibung genannten Materialien, insbesondere Cellulosefasermaterialien, wie Baumwolle, in dem in dem jeweiligen Tabellenbeispiel (hier für Baumwolle) angegebenen Farbton in hoher Farbstärke und mit guten Echtheiten.

| | Ausgangs-Aminoverbindungen der Formel | | |
|---|---|---|---|
| Bsp. | F-N($R^x$)H | $H_2N$-$Q^1$ | Farbton |
| 3 | N-(2-Carboxy-5-sulfophenyl)-N'-(2'-hydroxy-3'-amino-5'-sulfo-phenyl)-ms-phenyl-formazan(Cu-Komplex) | γ-(ß'-Sulfatoethyl-sulfonyl)-propylamin | blau (608) |
| 4 | 2-Naphthylamin-3,6,8-trisulfonsäure<br>→ 3-Aminophenylharnstoff | dito | (417) |
| 5 | 2-Naphthylamin-4,8-disulfonsäure<br>→ 1-Amino-3-acetylaminobenzol | dito | (418) |
| 6 | 1-Amino-4-(3'-amino-2',4',6'-trimethylphenylamino)-anthrachinon-2,5'-disulfonsäure | dito | blau (622) |
| 7 | 2-Naphthylamin-4,6,8-trisulfonsäure<br>→ 1-Naphthylamin-6-sulfonsäure<br>→ 3-Methyl-anilin | dito | (445) |
| 8 | 2-Naphthylamin-1,5-disulfonsäure<br>→ 1-Amino-8-naphthol-3,6-disulfonsäure | γ-(ß'-Sulfatoethyl-sulfonyl)-propylamin | (536) |

| | Ausgangs-Aminoverbindungen der Formel | | |
|---|---|---|---|
| Bsp. | $F-N(R^x)H$ | $H_2N-Q^1$ | Farbton |
| 9 | 2-Aminonaphthalin-1,5-disulfonsäure → 1-Amino-3-acetylaminobenzol | 1-Aminobenzol-3-ß-sulfatoethylsulfon | rotstichiggelb |
| 10 | 2-Aminonaphthalin-1,5-disulfonsäure → 3-Aminophenylharnstoff | dito | rotstichiggelb |
| 11 | 2-Aminonaphthalin-1,5-disulfonsäure → 1-Amino-3-hydroxyacetylaminobenzol | 1-Aminobenzol-4-(ß-sulfatoethylsulfon | rotstichiggelb |
| 12 | 2-Aminonaphthalin-5,7-disulfonsäure → 1-Amino-3-acetylaminobenzol | 1-Aminobenzol-3-sulfatoethylsulfon | rotstichiggelb |
| 13 | 2-Aminonaphthalin-5,7-disulfonsäure → 3-Aminophenylharnstoff | 1-Aminobenzol-4-ß-sulfatoethylsulfon | rotstichiggelb |
| 14 | 2-Aminonaphthalin-4,8-disulfonsäure → 1-Amino-3-methylbenzol | 1-Aminobenzol-3-ß-sulfatoethylsulfon | gelb |
| 15 | 2-Aminonaphthalin-4,8-disulfonsäure → 1-Amino-3-acetylaminobenzol | dito | gelb |

| | Ausgangs-Aminoverbindungen der Formel | | |
|---|---|---|---|
| Bsp. | $F-N(R^x)H$ | $H_2N-Q^1$ | Farbton |
| 16 | 2-Aminonaphthalin-3,6-disulfonsäure → 1-Amino-3-acetylaminobenzol | dito | rotsichtiggelb |
| 17 | 2-Aminonaphthalin-3,6-disulfonsäure → 3-Aminophenylharnstoff | dito | rotstichiggelb |
| 18 | 2-Aminonaphthalin-6,8-disulfonsäure → 1-Amino-3-aceylaminobenzol | dito | rotstichiggelb |
| 19 | 2-Aminonaphthalin-6,8-disulfonsäure → 1-Amino-2-methoxynaphthalin-6-sulfonsäure | dito | rotstichiggelb |
| 20 | 2-Aminonaphthalin-3,6,8-trisulfonsäure → 1-Amino-3-acetylaminobenzol | 1-Aminobenzol-3-ß-sulftoethylsulfon | rotstichiggelb |
| 21 | 2-Aminonaphthalin-3,6,8-trisulfonsäure → 3-Aminophenylharnstoff | dito | rotstichiggelb |
| 22 | 2-Aminonaphthalin-3,6,8-trisulfonsäure → 1-Amino-3-methylbenzol | dito | rotstichiggelb |

| | Ausgangs-Aminoverbindungen der Formel | | |
|---|---|---|---|
| Bsp. | $F\text{-}N(R^x)H$ | $H_2N\text{-}Q^1$ | Farbton |
| 23 | 2-Aminonaphthalin-4,6,8-trisulfonsäure<br>→ 1-Amino-3-methylbenzol | dito | rotstichiggelb |
| 24 | 2-Aminonaphthalin-4,6,8-trisulfonsäure<br>→ 1-Amino-3-acetylaminobenzol | dito | rotstichiggelb |
| 25 | 1-Aminobenzol-2,5-disulfonsäure<br>→ 1-Aminonaphthalin-6-sulfonsäure | dito | rotstichiggelb |
| 26 | 1-Aminobenzol-2,5-disulfonsäure<br>→ 1-Aminonaphthalin-6-sulfonsäure<br>→ 1-Aminonaphthalin-8-sulfonsäure | 1-Aminobenzol-3-ß-sulfatoethylsulfon | rotstichigbraun |
| 27 | 1-Aminonaphthalin-2,5,7-trisulfonsäure<br>→ 1-Aminonaphthalin-6-sulfonsäure<br>→ 1-Aminonaphthalin-8-sulfonsäure | dito | violettstichigbraun |
| 28 | 1-Aminonaphthalin-2,5,7-trisulfonsäure<br>→ 1-Amino-2,5-dimethylbenzol<br>→ 1-Aminonaphthalin-6-sulfonsäure | dito | rotstichigbraun |

| | Ausgangs-Aminoverbindungen der Formel | | |
|---|---|---|---|
| Bsp. | F-N($R^x$)H | $H_2N$-$Q^1$ | Farbton |
| 29 | 4-Aminoazobenzol-3,4'-disulfonsäure → 1-Aminonaphthalin-6-sulfonsäure | dito | gelbbraun |
| 30 | 1,4-Diaminobenzol-2,5'-disulfonsäure → 1-Ethyl-3-sulfomethyl-4-methyl-6-hydroxy- pyridon-(2)-5-carbonsäureamid | 1-Amino-4-methyl-benzol-3-ß-sulfato-ethylsulfon | gelb |
| 31 | 1-Amino-3-acetylaminobenzol-6-sulfonsäure → 1-Ethyl-3-sulfomethyl-4-methyl-6-hydroxy-pyridon-(2)-5-carbonsäureamid (verseift) | 3-(ß-Sulfatoethyl-sulfonyl-anilin | gelb |
| 32 | 1-Amino-3-acetylaminobenzol-6-sulfonsäure → 1-Ethyl-3-aminocarbonyl-4-methyl-6- hydroxy-pyridon-(2) (verseift) | 1-Aminobenzol-4-ß-sulfatoethylsulfon | gelb |
| 33 | 1-Amino-3-acetylaminobenzol-6-sulfonsäure → 1-(2',5'-Dichlor-4'-sulfophenyl)-3-methyl-pyrazolon-(5) (verseift) | dito | gelb |

| | Ausgangs-Aminoverbindungen der Formel | | |
|---|---|---|---|
| Bsp. | F-N($R^x$)H | $H_2N-Q^1$ | Farbton |
| 34 | 1-Amino-3-acetylamonobenzol-6-sulfonsäure → 1-(2',5'-Disulfophenyl)-3-methyl-pyrazolon-(5) (verseift) | dito | gelb |
| 35 | 1-Amino-3-acetylaminobenzol-6-sulfonsäure → 1-(4'-Sulfophenyl)-3-carboxy-pyrazolon-(5) (verseift) | 1-Aminobenzol-4-ß-sulfatoethylsulfon | gelb |
| 36 | 1-Amino-3-acetylaminobenzol-6-sulfonsäure → 1-(2'-Methyl-4'-sulfophenyl)-3-carboxy-pyrazolon-(5) (verseift) | dito | gelb |
| 37 | 1-Amino-3-acetylaminobenzol-6-sulfonsäure → 1-(4',8'-Disulfonaphthyl-[2'])-3-methyl-pyrazolon-(5) (verseift) | dito | gelb |
| 38 | 1-Aminobenzol-2,5-disulfonsäure → 1-(3'-Aminophenyl)-3-methyl-pyrazolon-(5) (verseift) | dito | gelb |
| 39 | 1-Aminobenzol-2,5-disulfonsäure → 2-Acetylamino-5-hydroxynaphthalin-7-sulfonsäure (verseift) | 1-Aminobenzol-3-ß-sulfatoethylsulfon | orange |

| | Ausgangs-Aminoverbindungen der Formel | | |
|---|---|---|---|
| Bsp. | F-N($R^x$)H | $H_2N-Q^1$ | Farbton |
| 40 | 1-Aminobenzol-2-sulfonsäure → 2-Amino-5-hydroxynaphthalin-1,7-disulfonsäure | dito | orange |
| 41 | 2-Aminonaphthalin-1,5-disulfonsäure → 2-Acetylamino-5-hydroxynaphthalin-7-sulfonsäure (verseift) | dito | orange |
| 42 | 2-Aminonaphthalin-3,6,8-trisulfonsäure → 2-Acetylamino-5-hydroxynaphthalin-7-sulfonsäure (verseift) | dito | orange |
| 43 | 2-Aminonaphthalin-1,5,7-trisulfonsäure → 1-Acetylamino-5-hydroxynaphthalin-7-sulfonsäure (verseift) | dito | orange |
| 44 | 1-Amino-4-methoxybenzol-2,5-disulfonsäure → 2-Amino-5-hydroxynaphthalin-7-sulfonsäure | dito | scharlach |
| 45 | 1-Amino-4-methoxybenzol-2-sulfonsäure → 2-Amino-5-hydroxynaphthalin-7-sulfonsäure | dito | scharlach |

| | Ausgangs-Aminoverbindungen der Formel | | |
|---|---|---|---|
| Bsp. | F-N($R^x$)H | $H_2N-Q^1$ | Farbton |
| 46 | 1-Aminobenzol-2-sulfonsäure<br>→ 1-(4'-Nitrobenzoylamino)-8-hydroxy-naphthalin-3,6-disulfonsäure (reduziert) | dito | rot |
| 47 | 1-Aminobenzol-2,5-disulfonsäure<br>→ 1-(3'-Nitrobenzoylamino)-8-hydroxy-naphthalin-4,6-disulfonsäure (reduziert) | dito | rot |
| 48 | 2-Amino-5-aminomethylnaphthalin-1-sulfonsäure<br>→ 1-Benzoylamino-8-hydroxynaphthalin-3,6-disulfonsäure | dito | rot |
| 49 | 2-Aminonaphthalin-1,5-disulfonsäure<br>→ 1-(4'-Nitrobenzoylamino)-8-hydroxy-naphthalin-3,6-disulfonsäure (reduziert) | dito | rot |
| 50 | 1-Hydroxy-2-aminobenzol-4-sulfonsäure<br>→ 2-Amino-5-hydroxynaphthalin-7-sulfonsäure (Cu-Komplex) | dito | rubin |

| | Ausgangs-Aminoverbindungen der Formel | | |
|---|---|---|---|
| Bsp. | F-N($R^X$)H | $H_2N$-$Q^1$ | Farbton |
| 51 | 1-Hydroxy-2-aminobenzol-4,6-disulfonsäure → 2-Amino-5-hydroxynaphthalin-7-sulfonsäue (Cu-Komplex) | 1-Aminobenzol-3-ß-chlorethylsulfon | rubin |
| 52 | 1-Hydroxy-2-aminobenzol-4,6-disulfonsäure → 2-Ethylamino-5-hydroxynaphthalin-7-sulfonsäure (Cu-Komplex) | 1-Amino-4-methoxy-benzol-3-ß-sulfato-ethylsulfon | rubin |
| 53 | 1-Hydroxy-2-aminobenzol-4,6-disulfonsäure → 2-Amino-8-hydroxynaphthalin-3,6-disulfonsäure (Cu-Komplex) | 1-Aminobenzol-3-ß-sulfatoethylsulfon | rubin |
| 54 | 1-Hydroxy-2-aminobenzol-4,6-disulfonsäure → 1-Amino-8-hydroxynaphthalin-3,6-disulfonsäure (Cu-Komplex) | dito | violett |
| 55 | 1-Hydroxy-2-amino-4,6-disulfonsäure → 1-Amino-8-hydroxynaphthalin-4,6-disulfonsäure (Cu-Komplex) | dito | violett |

| | Ausgangs-Aminoverbindungen der Formel | | |
|---|---|---|---|
| Bsp. | F-N($R^x$)H | $H_2N-Q^1$ | Farbton |
| 56 | 1-Hydroxy-2-amino-4-acetylaminobenzol-6-sulfonsäure → 1-Amino-8-hydroxynaphthalin-2,4-disulfonsäure (Cu-Komplex) (verseift) | dito | blau |
| 57 | 1-Hydroxy-2-amino-6-acetylaminobenzol-4-sulfonsäure → 1-Amino-8-hydroxynaphthalin-2,4-disulfonsäure, verseift (Cu-Komplex) | dito | blau |
| 58 | 1-Amino-2-hydroxy-6-nitronaphthalin-4-sulfonsäure → 1-Amino-8-hydroxynaphthalin-2,4-disulfonsäure, reduziert (Cu-Komplex) | dito | blau |
| 59 | 1-Amino-2-hydroxy-6-nitronaphthalin-4-sulfonsäure, → 1-Amino-8-hydroxynaphthalin-2,4,6-trisulfonsäure, reduziert (Cu-Komplex) | dito | blau |
| 60 | 2-Amino-1-hydroxynaphthalin-4,8-disulfonsäure → 1-Amino-8-hydroxynaphthalin-3,6-disulfonsäure (Cu-Komplex) | dito | blau |

| | Ausgangs-Aminoverbindungen der Formel | | |
|---|---|---|---|
| Bsp. | F-N($R^x$)H | $H_2N$-$Q^1$ | Farbton |
| 61 | 2-Aminonaphthalin-4,8-disulfonsäure → 2-Hydroxy-3-aminonaphthalin-5,7-disulfonsäure (oxydierendgekupfert) | dito | blau |
| 62 | 3-Methoxy-4-amino-6-methylazobenzol-2',5'-disulfonsäure → 2-Methylamino-5-hydroxynaphthalin-7-sulfonsäure (entmethylierend gekupfert) | dito | marineblau |
| 63 | 3-Methoxy-4-amino-6-methylazobenzol-2',4'-disulfonsäure → 2-Amino-5-hydroxynaphthalin-1,7-disulfonsäure (entmethylierend gekupfert) | dito | marineblau |
| 64 | 1-Amino-3-acetylaminobenzol-6-sulfonsäure → 1-Amino-8-hydroxy-7-(4'-sulfophenylazo)-naphthalin-3,6-disulfonsäure (verseift) | dito | blau |
| 65 | 1-Amino-4-(3'-amino-2',4',6'-trimethylphenylamino)-anthrachinon-2,5'-disulfonsäure | dito | blau |

| | Ausgangs-Aminoverbindungen der Formel | | |
|---|---|---|---|
| Bsp. | $F-N(R^x)H$ | $H_2N-Q^1$ | Farbton |
| 66 | 1-Amino-4-(2',6'-dimethyl-3'-aminomethyl-phenylamino)-anthrachinon-2,5'-disulfonsäure | dito | rotstichigblau |
| 67 | 1-Amino-4-(4'-methyl-2'-aminomethyl-phenylamino)-anthrachinon-2,6'-disulfonsäure | dito | rotstichigblau |
| 68 | 1-Amino-4-(5'-amino-phenylamino)-anthrachinon-2,2',4'-trisulfonsäure | dito | blau |
| 69 | 1-Amino-4-(4'-amino-phenylamino)-anthrachinon-2,3'-disulfonsäure | dito | blau |
| 70 | 1-Amino-4-(4'-amino-phenylamino)-anthrachinon-2,2'-disulfonsäure | dito | blau |
| 71 | 1-Amino-4-(3'-amino-phenylamino)-anthrachinon-2,4'-disulfonsäure | dito | blau |
| 72 | 1-Amino-4-(2'-methyl-3'-amino-phenylamino)-anthrachinon-2,5'-disulfonsäure | dito | blau |

| | Ausgangs-Aminoverbindungen der Formel | | |
|---|---|---|---|
| Bsp. | F-N($R^x$)H | $H_2N$-$Q^1$ | Farbton |
| 73 | 1-Amino-4-(2'-methyl-3'-amino-phenylamino)-anthrachinon-2,6,5'-trisulfonsäure | dito | grünstichigblau |
| 74 | 1-Amino-4-(5'-aminomethyl-phenylamino)-anthrachinon-2,2',4'-trisulfonsäure | dito | blau |
| 75 | 1-Amino-4-(4'-amino-cyclohexylamino)-anthrachinon-2,6-disulfonsäure | 1-Aminobenzol-3-ß-sulfatoethylsulfon | blau |
| 76 | 1-Amino-4-(4'-amino-cyclohexylamino)-anthrachinon-2-sulfonsäure | 1-Aminobenzol-5-ß-sulfatoethylsulfon-2,4-disulfonsäure | blau |
| 77 | 1-Amino-4-(3'-amino-4'-methyl-cyclohexylamino)-anthrachinon-2-sulfonsäure | dito | blau |
| 78 | 1-Amino-4-(3'-amino-2'-methyl-cyclohexylamino)-anthrachinon-2-sulfonsäure | dito | blau |

| | Ausgangs-Aminoverbindungen der Formel | | |
|---|---|---|---|
| Bsp. | F-N($R^x$)H | $H_2N-Q^1$ | Farbton |
| 79 | 1-Amino-4-(4'-amino-3'-methyl-cyclohexylamino)-anthrachinon-2-sulfonsäure | dito | blau |
| 80 | 1-Amino-4-(4'-aminomethyl-cyclohexyl-amino)-anthrachinon-2-sulfonsäure | dito | blau |
| 81 | 1-Amino-4-(3'-aminomethyl-cyclohexyl-amino)-anthrachinon-2-sulfonsäure | dito | blau |
| 82 | 1-Amino-4-(2'-amino-ethylamino)-anthrachinon-2-sulfonsäure | dito | blau |
| 83 | 1-Amino-4-(2'-methylamino-ethylamino)-anthrachinon-2-sulfonsäure | 1-Aminobenzol-5-ß-sulfatoethylsulfon-2-sulfonsäure | blau |
| 84 | 1-Amino-4-(3'-amino-1-propylamino)-anthrachinon-2-sulfonsäure | dito | blau |

| | Ausgangs-Aminoverbindungen der Formel | | |
|---|---|---|---|
| Bsp. | F-N($R^x$)H | $H_2N$-$Q^1$ | Farbton |
| 85 | 1-Amino-4-(3'-methylamino-1-propylamino)-anthrachinon-2-sulfonsäure | dito | blau |
| 86 | 1-Amino-4-(4'-amino-1-butylamino)-anthrachinon-2-sulfonsäure | dito | blau |
| 87 | N-(2-Carboxy-4-sulfophenyl)-N'-(2'-hydroxy-3'-amino-5'-sulfophenyl)-ms-phenylformazan (Cu-Komplex) | 1-Aminobenzol-3-ß-sulfatoethylsulfon | blau |
| 88 | N-(2-Carboxy-5-sulfophenyl)-N'-(2'-hydroxy-3'-amino-5'-sulfophenyl)-ms-phenylformazan | dito | blau |
| 89 | N-(2-Carboxy-4-sulfophenyl)-N'-(2'-hydroxy-3'-amino-5'-sulfophenyl)-m-(2"-chlor-5"-sulfophenyl)-formazan (Cu-Komplex) | dito | blau |
| 90 | N-(2-Carboxy-4-aminophenyl)-N'-(2'-hydroxy-3',5'-disulfophenyl)-ms-(3"-sulfophenyl)-formazan (Cu-Komplex) | dito | blau |

| | Ausgangs-Aminoverbindungen der Formel | | |
|---|---|---|---|
| Bsp. | $F-N(R^x)H$ | $H_2N-Q^1$ | Farbton |
| 91 | N-(2-Carboxy-5-sulfophenyl)-N'-(2'-hydroxy-3'5'-disulfophenyl)-ms-(3"-aminophenyl)-formazan (Cu-Komplex) | dito | grünstichigblau |
| 92 | N-(2-Hydroxy-3-amino-5-sulfophenyl)-N'-(2'-hydroxy-4'-sulfophenyl)-ms-(2"-sulfophenyl)-formazan (Cu-Komplex) | dito | marineblau |
| 93 | N-(2-Hydroxy-5-sulfophenyl-N'-(2'-hydroxy-3',5'-disulfophenyl)-ms-(4"-aminophenyl)-formazan (Cu-Komplex) | dito | blau |
| 94 | N-(2-Hydroxy-5-amino-3-sulfophenyl)-N'-(2',5'-disulfophenyl)-ms-phenylformazan (Cu-Komplex) | dito | blau |
| 95 | N-(2-Hydroxy-4,6-disulfophenyl)-N'-(2'.4'-disulfophenyl)-ms-(3"-aminophenyl)-formazan (Cu-Komplex) | dito | blau |
| 96 | N-(2-Hydroxy-4-sulfophenyl)-N'-(4'-amino-2'-sulfophenyl)-ms-(4"-chlor-3"-sulfophenyl)-formazan (Cu-Komplex) | dito | blau |

| | Ausgangs-Aminoverbindungen der Formel | | |
|---|---|---|---|
| Bsp. | F-N($R^X$)H | $H_2N$-$Q^1$ | Farbton |
| 97 | 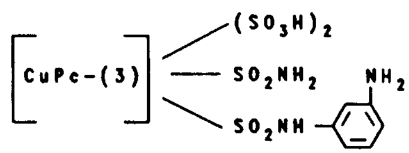 | dito | türkisblau |
| 98 | 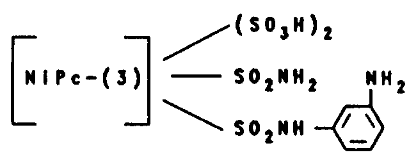 | dito | türkisblau |
| 99 | 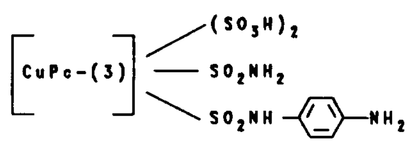 | dito | türkisblau |

| | Ausgangs-Aminoverbindungen der Formel | | |
|---|---|---|---|
| Bsp. | F-N(R$^x$)H | $H_2N$-$Q^1$ | Farbton |
| 100 | 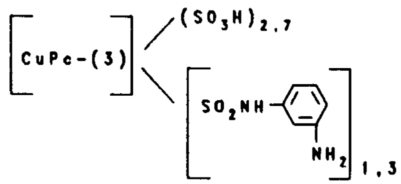 | dito | türkisblau |
| 101 | 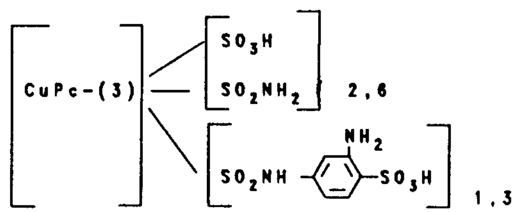 | dito | türkisblau |
| 102 | 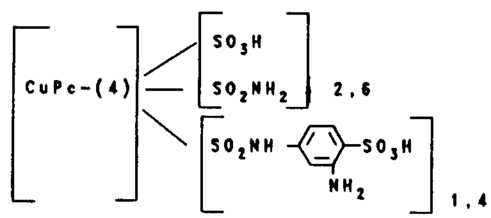 | dito | türkisblau |

| | Ausgangs-Aminoverbindungen der Formel | | |
|---|---|---|---|
| Bsp. | $F\text{-}N(R^x)H$ | $H_2N\text{-}Q^1$ | Farbton |
| 103 | 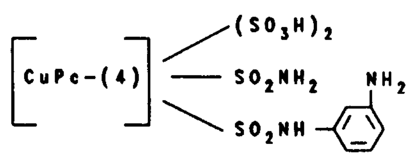 | dito | türkisblau |
| 104 | 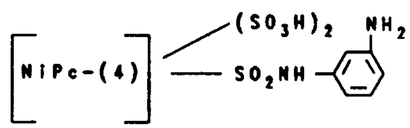 | dito | türkisblau |
| 105 | 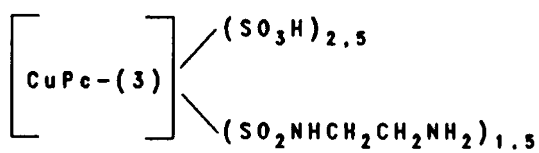 | dito | türkisblau |
| 106 | 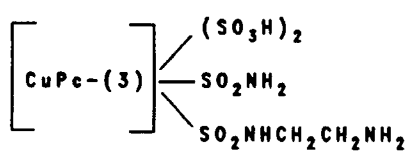 | dito | türkisblau |

| | Ausgangs-Aminoverbindungen der Formel | | |
|---|---|---|---|
| Bsp. | F-N($R^x$)H | $H_2N-Q^1$ | Farbton |
| 107 | 2-Aminonaphthalin-1,5-disulfonsäure → 1-Amino-3-methylbenzol | 1-Aminobenzol-4-ß-sulfatoethylsulfon | gelb |
| 108 | 2-Aminonaphthalin-1,5-disulfonsäure → 1-Amino-3-methyl-6-methoxybenzol | dito | rotstichiggelb |
| 109 | 2-Aminonaphthalin-5,7-disulfonsäure → 1-Amino-3-methylbenzol | dito | rotstichiggelb |
| 110 | 2-Aminonaphthalin-4,8-disulfonsäure → N-Methylaminobenzol | dito | gelb |
| 111 | 2-Aminonaphthalin-4,8-disulfonsäure → 1-N-Ethylamino-3-methylbenzol | dito | gelb |
| 112 | 2-Aminonaphthalin-3,6,8-trisulfonsäure → 1-Aminobenzol | dito | rotstichiggelb |

| | Ausgangs-Aminoverbindungen der Formel | | |
|---|---|---|---|
| Bsp. | F-N($R^x$)H | $H_2N$-$Q^1$ | Farbton |
| 113 | 1-Aminonaphthalin-2,5,7-trisulfonsäure<br>→ 1-Amino-3-methyl-6-methoxybenzol<br>→ 1-Aminonaphthalin-8-sulfonsäure | dito | rotstichigbraun |
| 114 | 1-Amino-3-acetylaminobenzol-6-sulfonsäure<br>→ 1-Ethyl-3-sulfomethyl-4-methyl-6-hydroxypyridon-(2)-5-carbonsäureamid (verseift) | 1-Amino-2-methoxy-benzol-4-ß-sulfato-ethylsulfon | gelb |
| 115 | 1-Amino-3-acetylaminobenzol-6-sulfonsäure<br>→ 1-Ethyl-3-aminocarbonyl-4-methyl-6-hydroxypyridon-(2) (verseift) | 1-Aminobenzol-4-ß-sulfatoethylsulfon | gelb |
| 116 | 1-Amino-3-acetylaminobenzol-6-sulfonsäure<br>→ 1-(4'-Sulfophenyl)-3-methyl-pyrazolon-(5) (verseift) | dito | gelb |
| 117 | 1-Amino-3-acetylaminobenzol-6-sulfonsäure<br>→ 1-(5',7'-Disulfonaphthyl-[2'])-3-methylpyrazolon-(5) (verseift) | dito | gelb |

| | Ausgangs-Aminoverbindungen der Formel | | |
|---|---|---|---|
| Bsp. | $F-N(R^x)H$ | $H_2N-Q^1$ | Farbton |
| 118 | 1-Aminobenzol-2,4-disulfonsäure → 2-Acetylamino-5-hydroxynaphthalin-7-sulfonsäure (verseift) | 1-Amino-2-methoxy-benzol-5-ß-sulfato-ethylsulfon | orange |
| 119 | 2-Aminonaphthalin-1,5-disulfonsäure → 2-Acetylamino-5-hydroxynaphthalin-7-sulfonsäure (verseift) | 1-Amino-2-methoxy-benzol-5-ß-sulfoethyl-sulfon | orange |
| 120 | 1-Amino-methoxybenzol-2-sulfonsäure → 2-Amino-5-hydroxynaphthalin-7-sulfonsäure | 1-Aminobenzol-3-ß-sulfatoethylsulfon | scharlach |
| 121 | 2-Aminonaphthalin-1,5-disulfonsäure → 2-Acetylamino-8-hydroxynaphthalin-6-sulfonsäure (verseift) | 1-Aminobenzol-4-ß-sulfatoethylsulfon | gelbstichigrot |
| 122 | 1-Aminobenzol-2,4-disulfonsäure → 1-(4'-Nitrobenzoylamino)-8-hydroxynaphthalin-3,6-disulfonsäure (reduziert) | dito | rot |

| | Ausgangs-Aminoverbindungen der Formel | | |
|---|---|---|---|
| Bsp. | F-N($R^x$)H | $H_2N-Q^1$ | Farbton |
| 123 | 2-Aminonaphthalin-1,5-disulfonsäure → 1-(4'-Nitrobenzoylamino)-8-hydroxynaphthalin-4,6-disulfonsäure (reduziert) | 1-Aminobenzol-3-ß-sulfatoethylsulfon | rot |
| 124 | 1-Hydroxy-2-aminobenzol-4,6-disulfonsäure → 2-Amino-8-hydroxynaphthalin-6-sulfonsäure (Cu-Komplex) | 1-Aminobenzol-3-ß-sulfatoethylsulfon | rubin |
| 125 | 1-Hydroxy-2-aminobenzol-5-sulfonsäure → 1-Amino-8-hydroxynaphthalin-3,6-disulfonsäure (Cu-Komplex) | 1-Aminobenzol-4-ß-sulfatoethylsulfon | violett |
| 126 | 1-Amino-2-hydroxy-6-nitronaphthalin-4-sulfonsäure → 1-Amino-8-hydroxynaphthalin-2,4-disulfonsäure (Cu-Komplex( | 1-Aminobenzol-3-ß-sulfatoethylsulfon | blau |
| 127 | 1-Hydroxy-2-amino-4-acetylaminobenzol-6-sulfonsäure → 1-Amino-8-hydroxynaphthalin-2,4,6-trisulfonsäure (verseift, Cu-Komplex) | 1-Aminonaphthalin-4-ß-sulfatoethylsulfon | marineblau |

| Bsp. | Ausgangs-Aminoverbindungen der Formel F-N($R^x$)H | $H_2N-Q^1$ | Farbton |
|---|---|---|---|
| 128 | 2-Amino-1-methylbenzol-3,5-disulfonsäure<br>→ 1-Amino-2-methoxy-5-methylbenzol<br>→ 2-Amino-5-hydroxynaphthalin-7-sulfonsäure<br>(entmethylierend gekupfert) | 1-Aminobenzol-3-ß-sulfatoethylsulfon | marineblau |
| 129 | 1-Amino-3-acetylaminobenzol-6-sulfonsäure<br>→ 1-Amino-8-hydroxy-2-(phenylazo)-naphthalin-3,6-disulfonsäure (verseift) | dito | blau |
| 130 | 1-Amino-3-acetylaminobenzol-6-sulfonsäure<br>→ 1-Amino-8-hydroxy-7-(2',5'-disulfophenylazo)-naphthalin-3,6-disulfonsäure | 1-Amino-2,5-dimethoxybenzol-4-ß-sulfatoethylsulfon | blau |

Beispiel 131

Zu der unter Beispiel A hergestellten Lösung von 2,4,6-Trichlor-pyrimidin-5-carbonsäure-N-[γ-(β'-sulfatoethylsulfonyl)-propyl]-amid gibt man 14,5 Teile 1-Amino-8-hydroxynaphthalin-3,6-disulfonsäure und

führt die Umsetzung unter Einhaltung eines pH-Wertes von etwa 4,5 und einer Temperatur von etwa 80 °C während drei Stunden durch. Danach kühlt man den Ansatz auf 0 bis 10 °C ab und gibt eine in üblicher Weise hergestellte schwefelsaure wäßrige Diazoniumsalzlösung aus 11,3 Teilen 2-Amino-naphthalin-1,5-disulfonsäure, führt die Kupplungsreaktion innerhalb dieses Temperaturbereiches und bei einem pH-Wert von etwa 6,5 durch und isoliert die erhaltene erfindungsgemäße Azoverbindung, die, in Form der freien Säure geschrieben, der Formel

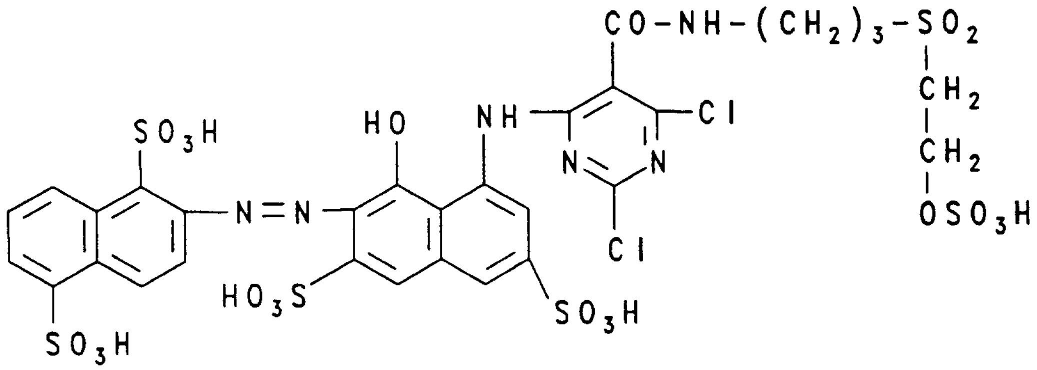

($\lambda_{max}$ = 541 nm)

besitzt, in üblicher Weise durch Aussalzen mit Natriumchlorid. Die Azoverbindung besitzt sehr gute Farbstoffeigenschaften und färbt nach den in der Technik für faserreaktive Farbstoffe üblichen Applikations- und Fixierverfahren die in der Beschreibung genannten Materialien, insbesondere Cellulosefasermaterilaien, wie Baumwolle, in brillanten blaustichig roten Tönen mit guten Echtheitseigenschaften.

Beispiele 132 bis 166

In den nachstehenden Tabellenbeispielen sind weitere erfindungsgemäße Azofarbstoffe entsprechend der allgemeinen Formel B

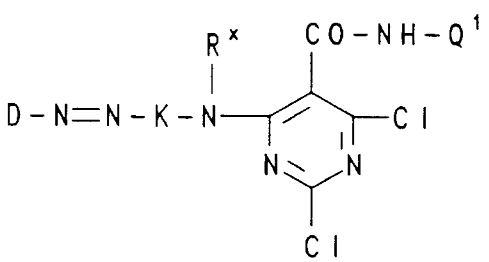

(B)

mit Hilfe ihrer Komponenten (des Diazorestes D, des Restes -K-N($R^x$)- einer aminogruppenhaltigen Kupplungskomponente und des Restes $Q^1$) beschrieben. Sie lassen sich in erfindungsgemäßer Weise, beispielsweise analog dem oben angegebenen Ausführungsbeispiel 131, unter Einsatz von 2,4,6-Trichlorpyrimidin-5-carbonsäurechlorid und der aus dem jeweiligen Tabellenbeispiel ersichtlichen Diazokomponente $D-NH_2$ , der Kupplungskomponente $H-K-NHR^x$ und dem Amin $H_2N-Q^1$ (entsprechend der allgemeinen Formel (23)) herstellen. Diese neuen Farbstoffe besitzen sehr gute faserreaktive Farbstoffeigenschaften und färben die in der Beschreibung genannten Materialien, insbesondere Cellulosefasermaterialien, wie Baumwolle, in dem in dem jeweiligen Tabellenbeispiel (hier für Baumwolle) angegebenen Farbton in hoher Farbstärke und mit guten Echtheiten.

| | Farbstoff der allgemeinen Formel (B) | | | |
|---|---|---|---|---|
| Bsp. | Rest D- | Rest -K-N($R^X$)- | Rest -$Q^1$ | Farbton |
| 132 | 2-Sulfo-phenyl | 3,6-Disulfo-8-hydroxy-naphth-7-yl-1-amino | 3-(ß-Sulfatoethylsulfonyl)-phenyl | rot |
| 133 | dito | 4,6-Disulfo-8-hydroxy-naphth-7-yl-1-amino | 3-(ß-Phosphatoethylsulfonyl)-phenyl | rot |
| 134 | 4-Carboxy-2-sulfo-phenyl | 3,6-Disulfo-8-hydroxy-naphth-7-yl-1-amino | 8-(ß-Sulfatoethylsulfonyl)-naphth-2-yl | rot |
| 135 | 2-Sulfo-4-methyl-phenyl | dito | 4-(ß-Sulfatoethylsulfonyl)-phenyl | rot |
| 136 | 2,5-Disulfo-phenyl | dito | 3-(ß-Sulfatoethylsulfonyl)-phenyl | rot |
| 137 | 1-Sulfo-naphth-2-yl | dito | 6-Sulfo-8-(ß-sulfatoethyl-sulfonyl)-naphth-2-y | rot |

| | Farbstoff der allgemeinen Formel (B) | | | |
|---|---|---|---|---|
| Bsp. | Rest D- | Rest -K-N($R^x$)- | Rest -$Q^1$ | Farbton |
| 138 | 1,5-Disulfo-naphth-2-yl | 4,6-Disulfo-8-hydroxy-naphth-7-yl-1-amino | 3-(ß-Sulfatoethylsulfonyl)-phenyl | rot |
| 139 | 1,5,7-Trisulfo-naphth-2-yl | 6-Sulfo-8-hydroxy-naphth-7-yl-1-amino | dito | rot |
| 140 | 1,5-Disulfo-naphth-2-yl | 3-Acetylamino-phen-4-yl-1-amino | 3-(ß-Sulfatoethylsulfonyl)-phenyl | rotstichiggelb |
| 141 | dito | 3-Ureido-phen-4-yl-1-amino | dito | rotstichiggelb |
| 142 | 5,7-Disulfo-naphth-2-yl | 3-Acetylamino-phen-4-yl-1-amino | dito | rotstichiggelb |
| 143 | dito | 3-Ureido-phen-4-yl-1-amino | 4-(ß-Sulfatoethylsulfonyl)-phenyl | rotstichiggelb |
| 144 | 4,8-Disulfo-naphth-2-yl | 3-Methyl-phen-4-yl-1-amino | 3-(ß-Sulfatoethylsulfonyl)-phenyl | gelb |

| | Farbstoff der allgemeinen Formel (B) | | | |
|---|---|---|---|---|
| Bsp. | Rest D- | Rest -K-N($R^X$)- | Rest -$Q^1$ | Farbton |
| 145 | dito | 3-Acetylamino-phen-4-yl-1-amino | dito | gelb |
| 146 | 3,6-Disulfo-naphth-2-yl | 3-Acetylamino-phen-4-yl-1-amino | 3-(ß-Sulfatoethylsulfonyl)-phenyl | rotstichiggelb |
| 147 | 6,8-Disulfo-naphth-2-yl | dito | dito | rotstichiggelb |
| 148 | 3,6,8-Trisulfo-naphth-2-yl | dito | dito | rotstichiggelb |
| 149 | 3,6-Disulfo-naphth-2-yl | 3-Ureido-phen-4-yl-1-amino | dito | rotstichiggelb |
| 150 | 3,6,8-Trisulfo-naphth-2-yl | dito | dito | rotstichiggelb |
| 151 | dito | 3-Methyl-phen-4-yl-1-amino | dito | rotstichiggelb |
| 152 | 4,6,8-Trisulfo-naphth-2-yl | dito | dito | rotstichiggelb |
| 153 | 2,5-Disulfo-phenyl | 6-Sulfo-naphth-4-yl-1-amino | dito | rotstichiggelb |
| 154 | 4-(2',5'-Disulfo-phenyl)-azo-6-sulfo-naphth-1-yl | 8-Sulfo-naphth-4-yl-amino | dito | rotstichigbraun |

| | Farbstoff der allgemeinen Formel (B) | | | |
|---|---|---|---|---|
| Bsp. | Rest D- | Rest -K-N($R^x$)- | Rest -$Q^1$ | Farbton |
| 155 | 4-(2',5',7'-Trisulfo-naphth-1'-yl)-azo-6-sulfo-naphth-1-yl | dito | dito | violettstichig braun |
| 156 | 4-(2',5',7'-Trisulfo-naphth-1'-yl)-azo-2,5-dimethyl-phenyl | 6-Sulfo-naphth-4-yl-1-amino | dito | rotstichigbraun |
| 157 | 2,5-Disulfo-phenyl | 1-Phenyl-3-methyl-pyrazol-5-on-4-yl-3'-amino | 4-(ß-Sulfatoethylsulfonyl)-phenyl | gelb |
| 158 | dito | 6-Sulfo-8-hydroxy-naphth-7-yl-3-amino | 3-(ß-Sulftoethylsulfonyl)-phenyl | orange |
| 159 | 2-Sulfo-phenyl | 4,6-Disulfo-8-hydroxy-naphth-7-yl-3-amino | dito | orange |
| 160 | 1,5-Disulfo-naphth-2-yl | 6-Sulfo-8-hydroxy-naphth-7-yl-3-amino | dito | orange |
| 161 | 3,6,8-Trisulfo-naphth-2-yl | dito | dito | orange |

| | Farbstoff der allgemeinen Formel (B) | | | |
|---|---|---|---|---|
| Bsp. | Rest D- | Rest -K-N($R^X$)- | Rest -$Q^1$ | Farbton |
| 162 | 2,5-Disulfo-4-methoxy-phenyl | dito | dito | scharlach |
| 163 | 2-Sulfo-4-methoxy-phenyl | dito | dito | scharlach |
| 164 | 2,5-Disulfo-phenyl | 4,6-Disulfo-8-hydroxy-1-(benzoylamino)-naphth-7-yl-3'-amino | dito | rot |
| 165 | 1,5-Disulfo-naphth-2-yl | 3,6-Disulfo-8-hydroxy-1-(benzoylamino)-naphth-7-yl-4'-amino | dito | rot |
| 166 | 2-Sulfo-phenyl | dito | dito | rot |

Beispiel 167

Zu der gemäß den Angaben des Beispieles A hergestellten Lösung von 2,4,6-Trichlor-pyrimidin-5-carbonsäure-N-[γ-(β'-sulfatoethylsulfonyl)-propyl]-amid gibt man 12,7 Teile 1,4-Diaminobenzol-2,5-disulfonsäure und führt die Umsetzung unter Einhaltung eines pH-Wertes zwischen 4 und 5 mittels 15 %iger wäßriger Natriumcarbonatlösung und bei einer Temperatur zwischen 60 und 80 ° C während drei Stunden durch. Danach kühlt man den Ansatz auf 20 ° C ab, fügt 7 Teile festes Natriumnitrit hinzu und rührt den Ansatz sodann in eine Mischung aus 25 Vol.-Teilen einer wäßrigen 10n-Salzsäure und 100 Teilen Eis. Die so erhaltene Diazoniumsalzlösung rührt man sodann in eine neutrale Lösung von 1 Ethyl-3-sulfomethyl-4-methyl-6-hydroxy-pyrid-2-on-5-carbonsäureamid in 100 Teilen Wasser ein, stellt den pH-Wert auf 6,5 und führt die Kupplungsreaktion unter Einhaltung dieses pH-Wertes bei etwa 10 ° C durch.

Die erhaltene erfindungsgemäße Azoverbindung der (in Form der freien Säure geschrieben) Formel

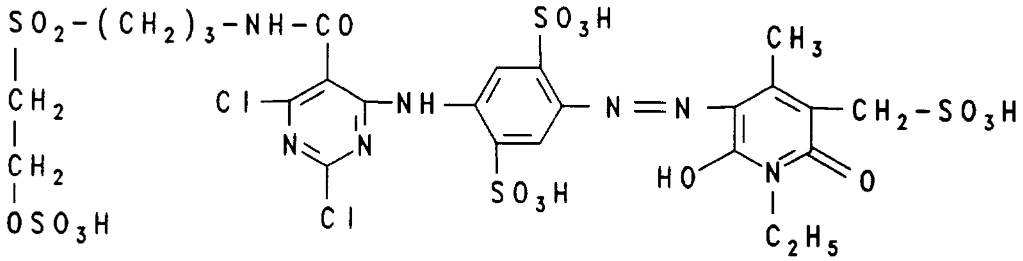

($\lambda_{max}$ = 390 nm)

wird durch Aussalzen mit Natriumchlorid isoliert. Man erhält ein oranges, elektrolytsalzhaltiges (vorwiegend natriumchloridhaltiges) Pulver des Alkalimetallsalzes (vorwiegend Natriumsalzes) dieser erfindungsgemäßen Monoazoverbindung, die sehr gute faserreaktive Farbstoffeigenschaften zeigt und beispielsweise Bauwmolle aus wäßriger Flotte in farbstarken, gelben Nuancen färbt.

Beispiel 168

Zu der gemäß den Angaben des Beispieles A hergestellten Lösung von 2,4,6-Trichlor-pyrimidin-5-carbonsäure-N-[γ-(β'-sulfatoethylsulfonyl)-propyl]-amid gibt man 80 Volumenteile einer wäßrigen Lösung mit 9,4 Teilen des Natriumsalzes der 1,3-Diaminobenzol-4-sulfonsäure. Die Umsetzung erfolgt bei einer Temperatur von 60 ° C und einem pH-Wert von 5. Nach Beendigung der Umsetzung kühlt man den Ansatz auf 20 ° C ab und diazotiert die zweite Aminogruppe in üblicher Weise nach Zugabe einer wäßrigen konzentrierten Salzsäure mittels einer wäßrigen konzentrierten Natriumnitritlösung. Zu der so hergestellten Diazoniumsalzlösung gibt man 16 Teile 1-Acetylamino-8-hydroxynaphthalin-3,6-disulfonsäure und führt die Kupplungsreaktion bei einem pH-Wert zwischen 6 und 6,5 und einer Temperatur von etwa 20 ° C. Der so hergestellte erfindungsgemäße Azofarbstoff der Formel (in Form der freien Säure geschrieben)

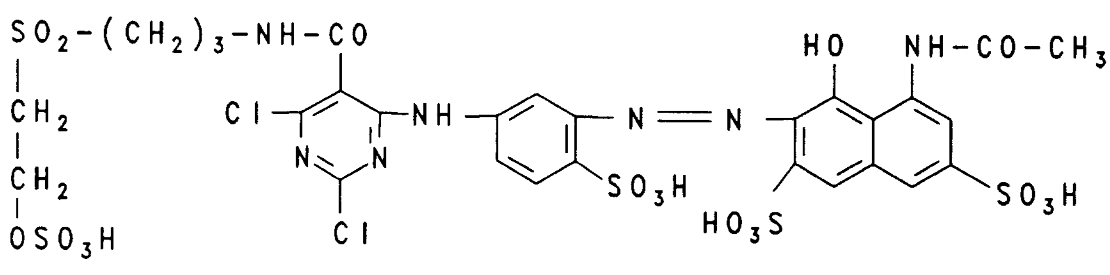

wird als Alkalimetallsalz (vorwiegend Kaliumsalz) durch Aussalzen mit Kaliumchlorid isoliert.

Der erfindungsgemäße Farbstoff färbt nach den in der Technik für faserreaktive Farbstoffe üblichen Applikations- und Fixiermethoden die in der Beschreibung genannten Materialien, insbesondere Cellulosefasermaterialien, wie Baumwolle, in farbstarken brillanten, roten Tönen mit guten Echtheitseigenschaften.

Beispiele 169 bis 220

In den nachstehenden Tabellenbeispielen sind weitere erfindungsgemäße Farbstoffe entsprechend einer allgemeinen Formel (C)

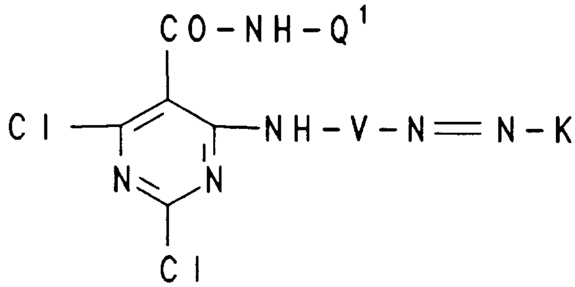

(C)

mit Hilfe ihrer Komponenten (des Phenylenrestes V, des Restes K einer Kupplungskomponente und des Restes $Q^1$) beschrieben. Sie lassen sich in erfindungsgemäßer Weise, beispielsweise analog den obigen Ausführungsbeispielen 167 und 168, unter Einsatz von 2,4,6-Trichlor-pyrimidin-5-carbonsäurechlorid und der aus dem jeweiligen Tabellenbeispiel ersichtlichen Diamino-benzol-Verbindung $H_2N$-V-$NH_2$ , der Kupplungskomponente H-K und dem Amin $H_2N$-$Q^1$ entsprechend der allgemeinen Formel (23) herstellen. Diese neuen Farbstoffe besitzen sehr gute faserreaktive Farbstoffeigenschaften und färben die in der Beschreibung genannten Materialien, insbesondere Cellulosefasermaterialien, wie Baumwolle, in dem in dem jeweiligen Tabellenbeispiel (hier für Baumwolle) angegebenen Farbton in hoher Farbstärke und mit guten Echtheiten.

| Farbstoff der allgemeinen Formel (C) | | | | |
|---|---|---|---|---|
| Bsp. | Rest -V- | Rest -K | Rest $-Q^1$ | Farbton |
| 169 | 2,5-Disulfo-1,4-phenylen | 1-(4'-Sulfophenyl)-3-methyl-pyrazol-5-on-4-yl | 3-(ß-Sulfatoethylsulfonyl)-phenyl | gelb |
| 170 | 4,6-Disulfo-1,3-phenylen | 1-(2',5'-Dichlor-4'-sulfophenyl)-3-methyl-pyrazol-5-on-4-yl | dito | gelb |
| 171 | 2,5-Disulfo-1,4-phenylen | dito | dito | gelb |
| 172 | 4,6-Disulfo-1,3-phenylen | dito | 3-(ß-Phosphatoethylsulfonyl)-phenyl | gelb |
| 173 | 2,5-Disulfo-1,4-phenylen | dito | dito | gelb |
| 174 | 4,6-Disulfo-1,3-phenylen | 1-(4',8'-Disulfo-naphth-2'-yl)-3-methyl-pyrazol-5-on-4-yl | 3-(ß-Sulfatoethylsulfonyl)-phenyl | rotstichiggelb |
| 175 | 2,5-Disulfo-1,4-phenylen | dito | dito | rotstichiggelb |
| 176 | 4,6-Disulfo-1,3-phenylen | 1-Ethyl-3-aminocarbonyl-4-methyl-6-hydroxy-pyrid-2-on-5-yl | dito | rotstichiggelb |

| Farbstoff der allgemeinen Formel (C) | | | | |
|---|---|---|---|---|
| Bsp. | Rest -V- | Rest -K | Rest $-Q^1$ | Farbton |
| 177 | 2,5-Disulfo-1,4-phenylen | dito | dito | rotstichiggelb |
| 178 | 4,6-Disulfo-1,3-phenylen | 1-[N-(3',5'-Disulfo-4'-amino-phenyl)-carbamoyl]-prop-1-en-2-yl | dito | gelb |
| 179 | 2,5-Disulfo-1,4-phenylen | dito | dito | gelb |
| 180 | 4,6-Disulfo-1,3-phenylen | 4-Sulfo-1-hydroxy-naphth-2-yl | 3-(ß-Chlorethylsulfonyl)-phenyl | blaustichigrot |
| 181 | 2,5-Disulfo-1,4-phenylen | dito | dito | blaustichigrot |
| 182 | 4,6-Disulfo-1,3-phenylen | 4,6-Disulfo-1-hydroxy-naphth-2-yl | dito | rot |
| 183 | 2,5-Disulfo-1,4-phenylen | dito | dito | rot |
| 184 | 4,6-Disulfo-1,3-phenylen | 6-Sulfo-2-hydroxy-naphth-1-yl | 3-(ß-Sulfatoethylsulfonyl)-phenyl | rot |
| 185 | 2,5-Disulfo-1,4-phenylen | 6-Sulfo-2-hydroxy-naphth-1-yl | dito | rot |

| Farbstoff der allgemeinen Formel (C) | | | | |
|---|---|---|---|---|
| Bsp. | Rest -V- | Rest -K | Rest $-Q^1$ | Farbton |
| 186 | 4,5-Disulfo-1,3-phenylen | 3,6-Disulfo-2-hydroxy-naphth-1-yl | dito | rot |
| 187 | 2,5-Disulfo-1,4-phenylen | dito | dito | rot |
| 188 | 4,5-Disulfo-1,3-phenylen | 6-Sulfo-8-hydroxy-3-acetylamino-naphth-7-yl | dito | scharlach |
| 189 | 2,5-Disulfo-1,4-phenylen | dito | dito | scharlach |
| 190 | 4,5-Disulfo-1,3-phenylen | 6-Sulfo-8-hydroxy-2-acetylamino-naphth-7-yl | dito | rot |
| 191 | 2,5-Disulfo-1,4-phenylen | dito | dito | rot |
| 192 | 4,5-Disulfo-1,3-phenylen | 3,6-Disulfo-8-hydroxy-1-acetylamino-naphth-7-yl | dito | blaustichigrot |
| 193 | 2,5-Disulfo-1,4-phenylen | dito | dito | blaustichigrot |

| Farbstoff der allgemeinen Formel (C) | | | | |
|---|---|---|---|---|
| Bsp. | Rest -V- | Rest -K | Rest $-Q^1$ | Farbton |
| 194 | 4,5-Disulfo-1,3-phenylen | 3,6-Disulfo-8-hydroxy-1-benzoylamino-naphth-7-yl | dito | rot |
| 195 | 2,4-Disulfo-1,4-phenylen | dito | dito | rot |
| 196 | 4,5-Disulfo-1,3-phenylen | 4,6-Disulfo-8-hydroxy-1-benzoylamino-naphth-7-yl | 4-(ß-Sulfatoethylsulfonyl)-naphth-1-yl | rot |
| 197 | 2,4-Disulfo-1,4-phenylen | dito | dito | rot |
| 198 | 4,5-Disulfo-1,3-phenylen | 6-Sulfo-8-hydroxy-2-acetylamino-naphth-7-yl | 3-(ß-Sulfatoethylsulfonyl)-phenyl | rot |
| 199 | 2,4-Disulfo-1,4-phenylen | dito | dito | rot |
| 200 | 4,5-Disulfo-1,3-phenylen | Kupferkomplex von 1-(4',6',8'-Trisulfo-1'-hydroxy-naphth-2'-yl)-azo-7-sulfo-2,5-dihydroxy-naphth-6-yl | dito | rotstichigblau |
| 201 | 2,4-Disulfo-1,4-phenylen | dito | dito | rotstichigblau |

| Farbstoff der allgemeinen Formel (C) | | | | |
|---|---|---|---|---|
| Bsp. | Rest -V- | Rest -K | Rest $-Q^1$ | Farbton |
| 202 | 4,5-Disulfo-1,3-phenylen | 2-(4'-Sulfo-phenyl)-azo-3,6-disulfo-1-amino-8-hydroxy-naphth-7-yl | dito | blau |
| 203 | 2,4-Disulfo-1,4-phenylen | dito | dito | blau |
| 204 | 4,5-Disulfo-1,3-phenylen | 4,6-Disulfo-1-hydroxy-naphth-2-yl | dito | rot |
| 205 | 2,4-Disulfo-1,4-phenylen | dito | dito | rot |
| 206 | 4,6-Disulfo-1,3-phenylen | 1-(4'Sulfophenyl)-3-methyl-pyrazol-5-on-4-yl | 3-(ß-Sulftoethylsulfonyl)-phenyl | gelb |
| 207 | 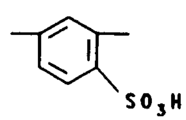 | 1-(3'-Sulfophenyl)-3-methyl-pyrazol-5-on-4-yl | 4-(ß-Sulfatoethylsulfonyl)-phenyl | gelb |
| 208 | dito | 1-(3'-Sulfophenyl)-3-methyl-5-amino-pyrazol-4-yl | dito | gelb |

| Farbstoff der allgemeinen Formel (C) | | | | |
|---|---|---|---|---|
| Bsp. | Rest -V- | Rest -K | Rest $-Q^1$ | Farbton |
| 209 | dito | 1-(2',5'-Dichlor-4'-sulfophenyl)-3-methyl-pyrazol-5-on-4-yl | dito | gelb |
| 210 | dito | 1-(5',7'-Disulfo-naphth-2'-yl)-3-methyl-pyrazol-5-on-4-yl | dito | gelb |
| 211 | dito | 1-Ethyl-3-sulfomethyl-4-methyl-6-hydroxy-2-on-5-yl | dito | gelb |
| 212 | dito | 6-Sulfo-2-amino-naphth-1-yl | dito | orange |
| 213 | dito | 5,7-Disulfo-2-amino-naphth-1-yl | 3-(ß-Sulfatoethylsulfonyl)-phenyl | orange |
| 214 | dito | 6-Sulfo-8-hydroxy-2-(methylamino)-naphth-1-yl | 3-(ß-Sulfatoethylsulfonyl)-phenyl | orange |
| 215 | dito | 3,6-Disulfo-2-hydroxy-naphth-1-yl | dito | scharlach |

| Farbstoff der allgemeinen Formel (C) | | | | |
|---|---|---|---|---|
| Bsp. | Rest -V- | Rest -K | Rest -$Q^1$ | Farbton |
| 216 | dito | 6-Sulfo-8-hydroxy-3-acetylamino-naphth-7-yl | dito | orange |
| 217 | dito | 3,6-Disulfo-8-hydroxy-1-benzoylamino-naphth-7-yl | dito | rot |
| 218 | dito | 4,6-Disulfo-8-hydroxy-1-acetylamino-naphth-7-yl | dito | rot |
| 219 | 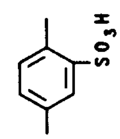 | 1-(2'-4'-Sulfophenyl)-3-carboxy-pyrazol-5-on-4-yl | dito | gelb |
| 220 | 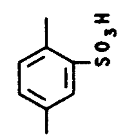 | 1-(2'-Chlor-5'-sulfo-phenyl)-3-methyl-pyrazol-5-on-4-yl | 3-(ß-Sulfatoethylsulfonyl)-phenyl | gelb |

## Patentansprüche

**1.** Farbstoff entsprechend der allgemeinen Formel F - Z , in welcher

F der Rest eines sulfogruppenhaltigen Mono-, Dis- oder Polyazofarbstoffes oder eines Schwermetallkomplex-Mono-, -Dis- oder -Trisazofarbstoffes oder eines Anthrachinon-, Phthalocyanin-, Formazan-, Azomethin-, Nitroaryl-, Dioxazin-, Phenazin- oder Stilbenfarbstoffes ist und

Z eine Gruppe der allgemeinen Formel (2)

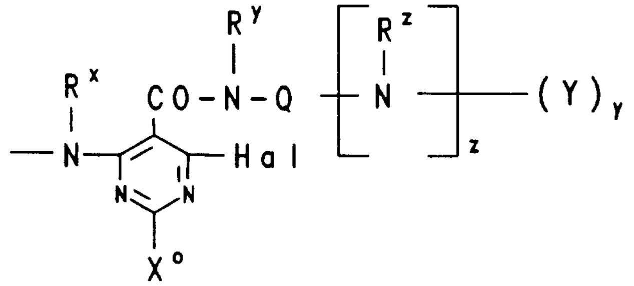

(2)

bedeutet, in welcher

$R^x$ Wasserstoff oder Alkyl von 1 bis 4 C-Atomen ist, wobei $-N(R^x)-$ auch Teil eines gesättigten Heterocyclus sein kann,

$R^y$ Wasserstoff oder Alkyl von 1 bis 4 C-Atomen ist,

$R^z$ Wasserstoff oder Alkyl von 1 bis 4 C-Atomen ist,

Q Phenylen ist, das durch 1 oder 2 Substituenten aus der Gruppe Alkyl von 1 bis 4 C-Atomen, Alkoxy von 1 bis 4 C-Atomen, Halogen, Nitro, Hydroxy, Carboxy und Sulfo substituiert sein kann, oder Naphthylen ist, das durch 1, 2 oder 3 Sulfogruppen substituiert sein kann, oder Q Alkylen von 1 bis 6 C-Atomen ist oder Alkylen von 2 bis 8 C-Atomen bedeutet, das durch 1 oder 2 Heterogruppen unterbrochen ist, oder Q ist alkylen-A-phenylen, phenylen-A-alkylen, alkylen-A-phenylen-A-alkylen, phenylen-A-alkylen-phenylen oder phenylen-A-phenylen , worin jedes phenylen , unabhängig voneinander, Phenylen ist, das durch 1 oder 2 Substituenten aus der Gruppe Alkyl von 1 bis 4 C-Atomen, Alkoxy von 1 bis 4 C-Atomen, Halogen, Nitro, Hydroxy, Carboxy und Sulfo substituiert sein kann, jedes alkylen , unabhängig voneinander, Alkylen von 1 bis 6 C-Atomen oder Alkylen von 2 bis 8 C-Atomen ist, das durch 1 oder 2 Heterogruppen unterbrochen ist, und jedes A , unabhängig voneinander, eine direkte Bindung oder eine Heterogruppe der Formeln -O-, $-SO_2-$, -CO-, -NH-, -CO-NH-, -NH-CO-, $-SO_2-NH-$, $-NH-SO_2-$, $-SO_2-$ oder -N(R)-, in welcher R Alkyl von 1 bis 4 C-Atomen, bedeutet, das durch Hydroxy, Sulfato, Phosphato, Sulfo oder Acetyloxy substituiert sein kann, oder Propionyl oder Acetyl ist,

z die Zahl Null oder 1 ist,

y die Zahl 1 oder 2 ist, wobei y gleich 1 ist, falls z gleich 1 ist,

Y Vinylsulfonyl, β-Chlorethylsulfonyl, β-Phosphatoethylsulfonyl oder β-Sulfatoethylsulfonyl ist,

Hal Chlor oder Fluor ist und

$X^o$ Chlor oder Fluor ist.

**2.** Farbstoff nach Anspruch 1 entsprechend der allgemeinen Formel (3a)

$$D_1 - N = N - (E - N = N)_v - K_2 - Z \quad (3a)$$

in welcher

$D_1$ ein Rest der allgemeinen Formel (4a) oder (4b)

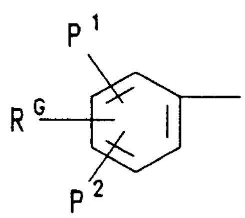

(4a)

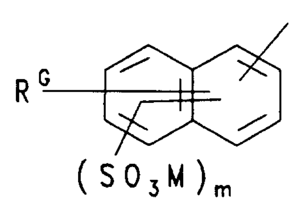

(4b)

ist, in welchen

$R^G$ Wasserstoff oder Sulfo ist,

$P^1$ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$P^2$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,

wobei der Benzolkern in Formel (4a) und (4b) zusätzlich in ortho-Stellung zur freien Bindung, die an die Azogruppe führt, eine Hydroxygruppe enthalten kann,

m die Zahl Null, 1 oder 2 bedeutet (wobei diese Gruppe im Falle von m gleich Null ein Wasserstoffatom bedeutet) und

M Wasserstoff oder ein salzbildendes Metallatom ist,

-$K_2$-Z ein Rest der allgemeinen Formel (9a), (9b), (9c), (9d), (9e), (9f), (9g) oder (9h)

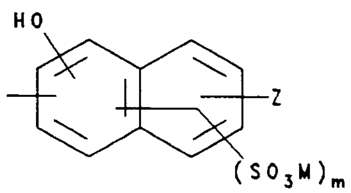

(9a)

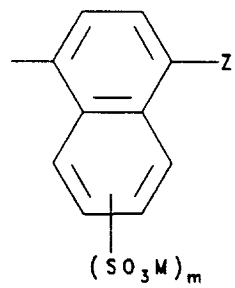

(9b)

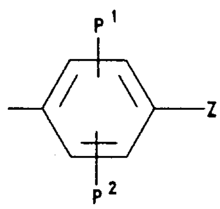

(9c)

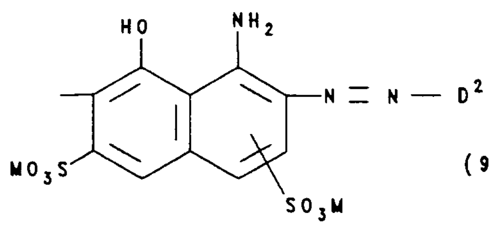

(9d)

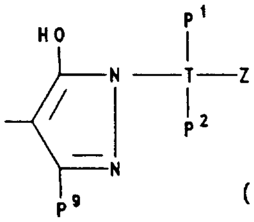

(9e)

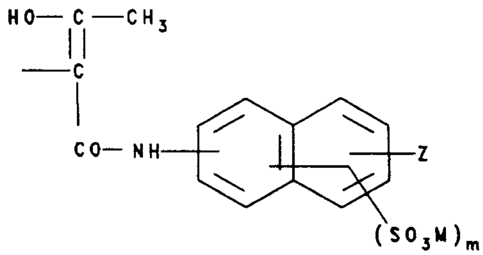

(9f)

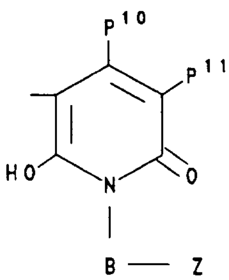

(9g)

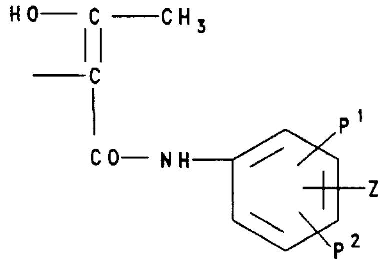

(9h)

ist, in welchen

| | |
|---|---|
| $P^1$, $P^2$, M und m | eine der oben angegebenen Bedeutungen haben, |
| Z | die in Anspruch 1 genannte Bedeutung hat, |
| $P^9$ | Wasserstoff, Alkyl von 1 bis 4 C-Atomen, Cyano, Carboxy, Carbalkoxy von 2 bis 5 C-Atomen, Carbamoyl oder Phenyl ist, |
| $P^{10}$ | Wasserstoff, Alkyl von 1 bis 4 C-Atomen oder durch Alkoxy von 1 bis 4 C-Atomen oder Cyano substituiertes Alkyl von 1 bis 4 C-Atomen ist, |
| $P^{11}$ | Wasserstoff, Chlor, Brom, Sulfo, Carbamoyl, Methylsulfonyl, Phenylsulfonyl, Cyano oder Sulfoalkyl von 1 bis 4 C-Atomen bedeutet, |
| T | für einen Benzol- oder Naphthalinring steht, |
| B | Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und |
| $D^2$ | einen Rest der allgemeinen Formel (6a) oder (6b) |

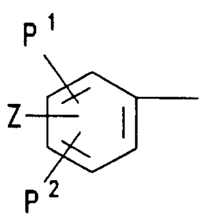

(6a)

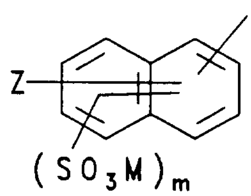

(6b)

ist, in welchen Z, M, m, $P^1$ und $P^2$ eine der obengenannten Bedeutungen besitzen, wobei der Benzolkern in ortho-Stellung zur freien Bindung, die zur Azogruppe führt, zusätzlich eine Hydroxygrupe enthalten kann,

| | |
|---|---|
| v | die Zahl 1 oder 2 ist und |
| E | einen Rest der allgemeinen Formel (7a), (7b) oder (7c) |

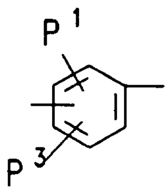 (7a) 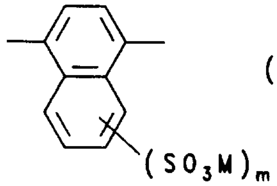 (7b) 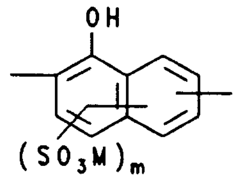 (7c)

bedeutet, in welchen

$P^1$, M und m eine der obengenannten Bedeutungen haben und

$P^3$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

**3.** Farbstoff nach Anspruch 1 entsprechend der allgemeinen Formel (3b)

$$Z - D_2 - N = N - (E - N = N)_v - K_1 \qquad (3b)$$

in welcher

$Z$-$D_2$- eine Gruppe der allgemeinen Formel (6a) oder (6b)

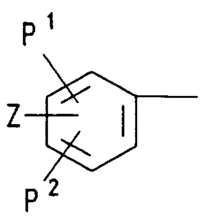 (6a) 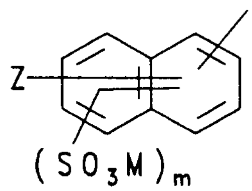 (6b)

ist, in welchen

Z die in Anspruch 1 genannte Bedeutung besitzt,

$P^1$ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-($C_1$ -$C_4$-Alkyl)-carbamoyl, Fluor, Chlor, Brom oder Trifluormethyl ist,

$P^2$ Wasserstoff, Methyl, Ethyl, Methoxy, Ethoxy, Cyano, Carboxy, Sulfo, Alkanoylamino von 2 bis 5 C-Atomen Alkoxycarbonyl von 2 bis 5 C-Atomen, Carbamoyl, N-($C_1$-$C_4$-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,

wobei der Benzolkern in Formel (6a) und (6b) zusätzlich in ortho-Stellung zur freien Bindung, die an die Azogruppe führt, eine Hydroxygruppe enthalten kann,

m die Zahl Null, 1 oder 2 bedeutet (wobei diese Gruppe im Falle von m gleich Null ein Wasserstoffatom bedeutet) und

M Wasserstoff oder ein salzbildendes Metallatom ist,

$K_1$ ein Rest der allgemeinen Formel (8a), (8b), (8c), (8d), (8e), (8f), (8g) oder (8h)

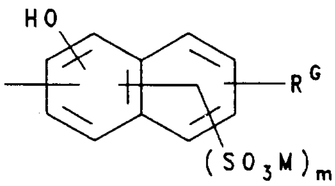
(8a)

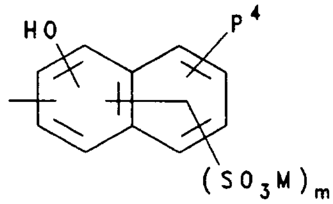
(8b)

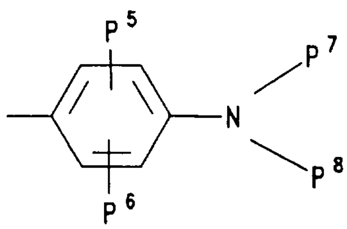
(8c)

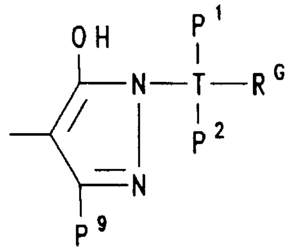
(8d)

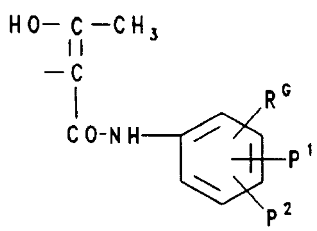
(8e)

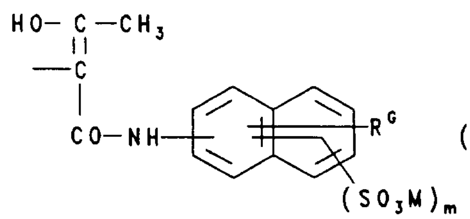
(8f)

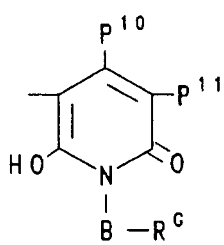
(8g)

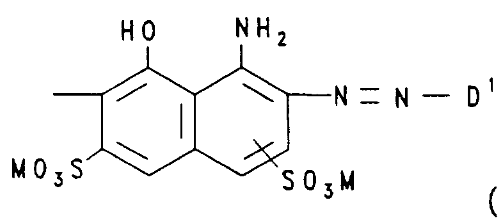
(8h)

ist, in welchen

| | |
|---|---|
| $P^1$, $P^2$, m und M | eine der obengenannten Bedeutungen haben, |
| $R^G$ | Wasserstoff oder Sulfo ist, |
| $P^4$ | Phenylureido ist, das im Phenylrest durch Substituenten aus der Gruppe Chlor, Methyl, Methoxy, Sulfo und Carboxy substituiert sein kann, oder Benzoylamino ist, das im Benzolrest durch Substituenten aus der Gruppe Chlor, Methyl, Methoxy, Nitro, Sulfo und Carboxy substituiert sein kann, |
| $P^5$ | Wasserstoff, Alkyl von 1 bis 4 C-Atomen, Alkoxy von 1 bis 4 C-Atomen, Brom, Chlor oder Alkanoylamino von 2 bis 7 C-Atomen, |
| $P^6$ | Wasserstoff, Alkyl von 1 bis 4 C-Atomen, Alkoxy von 1 bis 4 C-Atomen, Chlor, Alkanoylamino von 2 bis 7 C-Atomen, Ureido oder Phenylureido ist, |
| $P^7$ | Wasserstofff oder Alkyl von 1 bis 4 C-Atomen ist, das durch Hydroxy, |

Cyano, Carboxy, Sulfo, Sulfato, Methoxycarbonyl, Ethoxycarbonyl oder Acetoxy substituiert sein kann,

$P^8$ Alkyl von 1 bis 4 C-Atomen ist, das durch Hydroxy, Cyano, Carboxy, Sulfo, Sulfato, Methoxycarbonyl, Ethoxycarbonyl oder Acetoxy substituiert sein kann, oder Benzyl oder Phenyl oder durch Alkyl von 1 bis 4 C-Atomen, Alkoxy von 1 bis 4 C-Atomen, Chlor und/oder Sulfo substituiertes Phenyl ist,

$P^9$ Wasserstoff, Alkyl von 1 bis 4 C-Atomen, Cyano, Carboxy, Carbalkoxy von 2 bis 5 C-Atomen, Carbamoyl oder Phenyl ist,

T für einen Benzol- oder Naphthalinring steht,

$P^{10}$ Wasserstoff oder Alkyl von 1 bis 4 C-Atomen oder durch Alkoxy von 1 bis 4 C-Atomen oder durch Cyano substituiertes Alkyl von 1 bis 4 C-Atomen oder Phenyl ist,

$P^{11}$ Wasserstoff, Chlor, Brom, Sulfo, Carbamoyl, Methylsulfonyl, Phenylsulfonyl, Cyano oder Sulfoalkyl von 1 bis 4 C-Atomen bedeutet,

B Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und

$D^1$ ein Rest der allgemeinen Formel (4a) oder (4b)

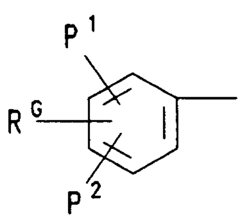

(4a)

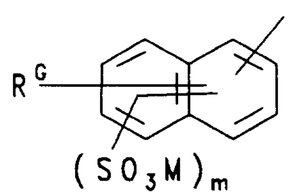

(4b)

ist, in welchen

$P^1$, $P^2$, $R^G$, M und m eine der obengenannten Bedeutungen haben und in welchen der jeweilige Benzolkern zusätzlich in ortho-Stellung zur freien Bindung, die an die Azogruppe führt, eine Hydroxygruppe enthalten kann,

v die Zahl Null oder 1 ist und

E einen Rest der allgemeinen Formel (7a), (7b) oder (7c)

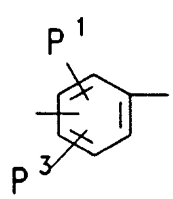

(7a)

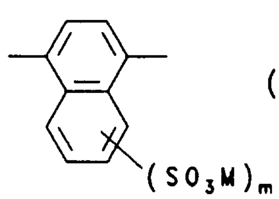

(7b)

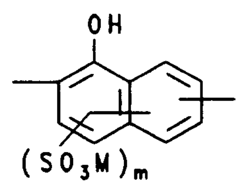

(7c)

bedeutet, in welchen

$P^1$, M und m eine der obengenannten Bedeutungen haben und

$P^3$ Wasserstoff, Alkyl von 1 bis 4 C-Atomen, Alkoxy von 1 bis 4 C-Atomen, Chlor Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

**4.** Farbstoff nach Anspruch 1 der allgemeinen Formel (3e)

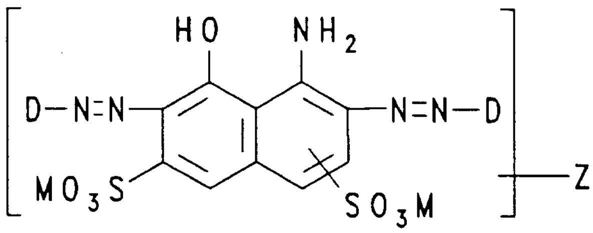

(3e)

in welcher
M Wasserstoff oder ein salzbildendes Metallatom ist,
der eine Rest D eine Gruppe der allgemeinen Formel (4a) oder (4b)

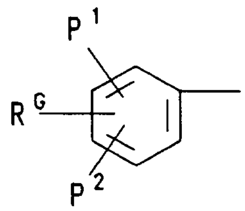

(4a)

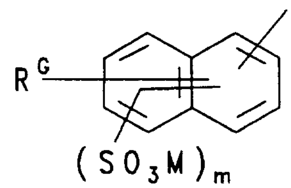

(4b)

bedeutet, in welchen

- $R^G$ Wasserstoff oder Sulfo ist,
- $P^1$ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
- $P^2$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,

  wobei der Benzolkern in Formel (4a) und (4b) zusätzlich in ortho-Stellung zur freien Bindung, die an die Azogruppe führt, eine Hydroxygruppe enthalten kann,
- m die Zahl Null, 1 oder 2 bedeutet (wobei diese Gruppe im Falle von m gleich Null ein Wasserstoffatom bedeutet) und
- M Wasserstoff oder ein salzbildendes Metallatom ist,

und das andere D mit Z verbunden ist und dieser Rest -D-Z einen Rest der allgemeinen Formel (6a) oder (6b)

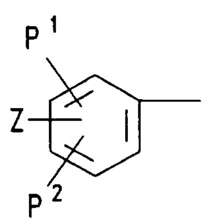

(6a)

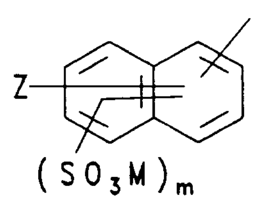

(6b)

bedeutet, in welchen $P^1$, $P^2$, M, m und Z die obengenannten bzw. in Anspruch 1 genannten Bedeutungen haben.

**5.** Farbstoff nach Anspruch 1 der allgemeinen Formel (3g)

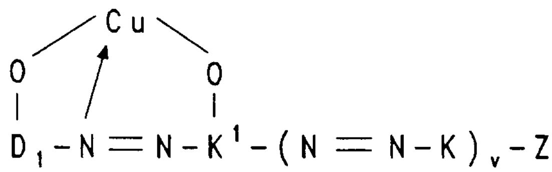

(3g)

in welcher

$D_1$ ein Rest der allgemeinen Formel (5a) oder (5b)

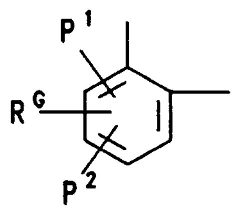

(5a)

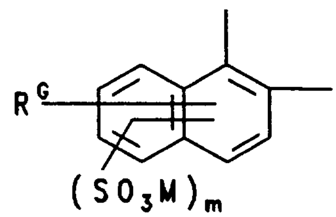

(5b)

ist, in welchen

$R^G$ Wasserstoff oder Sulfo ist,

$P^1$ Wasserstoff, Methyl, Ethyl, Methoxy, Ethoxy, Alkanoyl von 2 bis 5 C-Atomen, Cyano, Sulfo, Carboxy, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$P^2$ Wasserstoff, Methyl, Ethyl, Methoxy, Ethoxy, Cyano, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-sulfamoyl, Sulfophenylamidocarbonyl, Phenylamidocarbonyl, Alkylsulfonyl von 1 bis 4 C-Atomen, Phenylsulfonyl oder Phenoxy ist,

m die Zahl Null, 1 oder 2 bedeutet (wobei diese Gruppe im Falle von m gleich Null ein Wasserstoffatom bedeutet) und

M Wasserstoff oder ein salzbildendes Metallatom ist,

v die Zahl Null oder 1 ist,

$K^1$ ein Rest der allgemeinen Formel

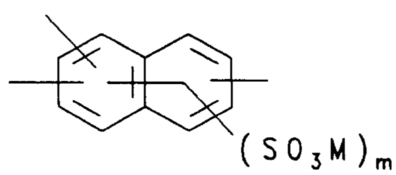

oder

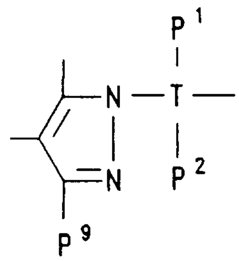

oder

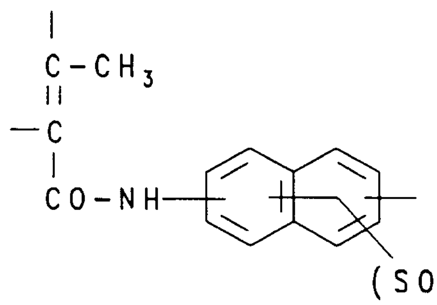

oder

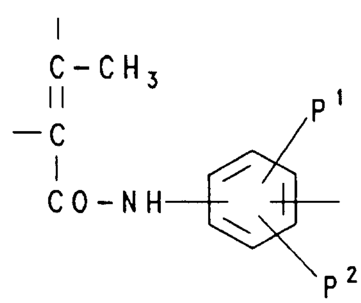

ist, in welchen

| | |
|---|---|
| $P^1$, $P^2$, M und m | eine der obengenannten Bedeutungen haben und |
| $P^9$ | Wasserstoff, Alkyl von 1 bis 4 C-Atomen, Cyano, Carboxy, Carbalkoxy von 2 bis 5 C-Atomen, Carbamoyl oder Phenyl, ist, |
| T | für einen Benzol- oder Naphthalinring steht, |

wobei im Falle von v gleich Null $K^1$-Z auch ein Rest der allgemeinen Formel

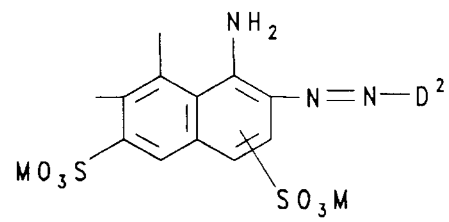

sein kann, in welcher

| | |
|---|---|
| M | eine der obengenannten Bedeutungen besitzt und |
| $D^2$ | ein Rest der allgemeinen Formel (6a) oder (6b) |

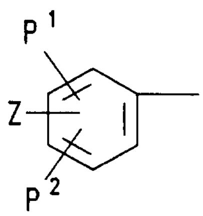

(6a)

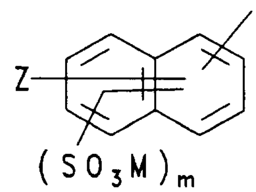

(6b)

ist, in welchen $P^1$, $P^2$, Z, M und m eine der obengenannten bzw. im Anspruch 1 genannten Bedeutungen besitzen.

**6.** Farbstoff nach Anspruch 1 entsprechend der allgemeinen Formel (13)

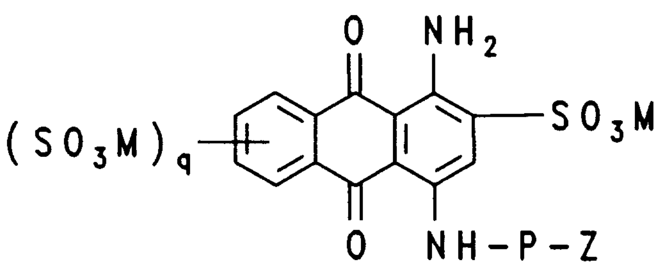

(13)

in welcher

| | |
|---|---|
| Z | die Anspruch 1 genannte Bedeutung besitzt, |
| M | Wasserstoff oder ein salzbildendes Metallatom ist, |
| P | Phenylen ist, das durch 1, 2, 3 oder 4 Substituenten aus der Gruppe Alkyl von 1 bis 4 C-Atomen, Alkoxy von 1 bis 4 C-Atomen, Halogen, Carboxy und Sulfo substituiert sein kann, oder Alkylen von 1 bis 4 C-Atomen oder -alk-NH-alk- oder -phen-NH-alk- ist, wobei phen gegebenenfalls substituiertes Phenylen und alk Alkylen von 1 bis 4 C-Atomen ist, oder P ist gegebenenfalls substituiertes Cyclohexylen ist, und |
| q | die Zahl Null oder 1 bedeutet (wobei im Falle von q gleich Null diese Gruppe für Wasserstoff steht). |

**7.** Farbstoff nach Anspruch 1 entsprechend der allgemeinen Formel (14)

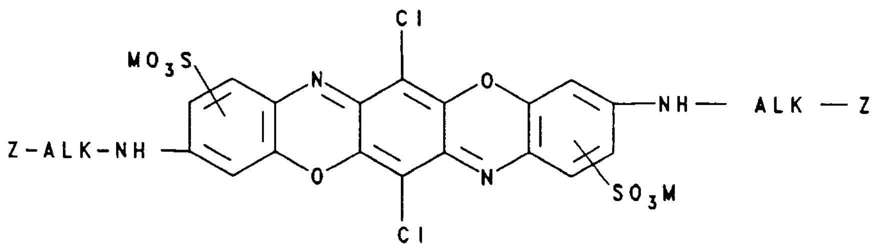

(14)

in welcher

Z die in Anspruch 1 genannte Bedeutung besitzt,

M Wasserstoff oder ein salzbildendes Metallatom ist und

ALK Alkylen von 2 bis 6 C-Atomen ist, das durch 1 oder 2 Heterogruppen unterbrochen und/oder substituiert sein kann, oder Cyclohexylen ist.

**8.** Farbstoff nach Anspruch 1 entsprechend der allgemeinen Formel (15)

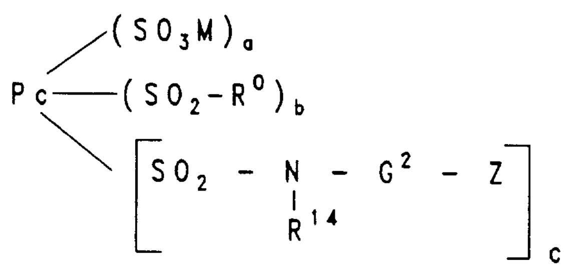

(15)

in welcher bedeuten:

Pc ist der Rest eines Kupfer- oder Nickelphthalocyanins;

$R^o$ ist eine Aminogruppe der Formel $-NR^{11}R^{12}$, in welcher $R^{11}$ und $R^{12}$ unabhängig voneinander Wasserstoff oder Alkyl von 1 bis 4 C-Atomen, das durch Hydroxy oder Sulfo substituiert sein kann, bedeuten, oder ist ein heterocyclischer, N-haltiger Rest;

$R^{14}$ ist Wasserstoff oder Alkyl von 1 bis 4 C-Atomen;

$G^2$ ist Phenylen, das durch 1 oder 2 Substituenten aus der Gruppe Alkyl von 1 bis 4 C-Atomen, Halogen, Carboxy und Sulfo substituiert sein kann;

Z hat die in Anspruch 1 genannte Bedeutung;

a ist eine Zahl von Null bis 3,

b ist eine Zahl von Null bis 3 und

c ist eine Zahl von 1 bis 2,

wobei die Summe von (a + b + c) gleich einer Zahl von 2 bis 4 ist.

**9.** Farbstoff nach Anspruch 1 entsprechend der allgemeinen Formel (16)

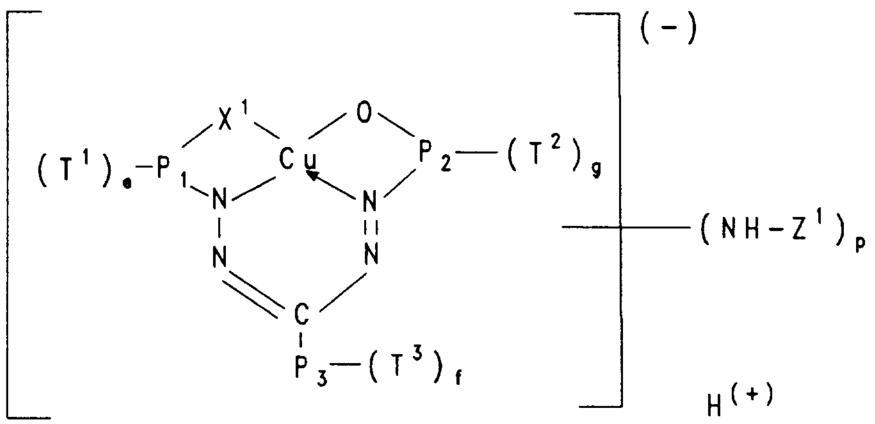

(16)

in welcher bedeuten:

| | |
|---|---|
| $X^1$ | ist ein Sauerstoffatom oder die Carbonyloxygruppe der Formel -COO-; |
| $P_1$ und $P_2$ | bedeuten, unabhängig voneinander, jedes einen Benzol-oder Naphthalinring, wobei an $P_1$ das Stickstoffatom und die Gruppe $X^1$ ortho-ständig zueinander und an $P_2$ das Sauerstoffatom und das Stickstoffatom ortho-ständig zueinander gebunden sind und die Benzolkerne bzw. Napthalinkerne noch durch einen oder zwei Substituenten aus der Gruppe Halogen, Nitro, Alkyl von 1 bis 4 C-Atomen, Sulfamoyl, durch Alkyl von 1 bis 4 C-Atomen mono-oder disubstituiertes Sulfamoyl, Alkylsulfonyl von 1 bis 4 C-Atomen und Phenylsulfonyl substituiert sein können; |
| $P_3$ | ist eine geradkettige oder verzweigte Alkylengruppe von 2 bis 6 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können; |
| $T^1$, $T^2$ und $T^3$ | bedeuten, unabhängig voneinander, jedes eine Sulfo-oder Carboxygruppe; |
| e, f und g | stellen, unabhängig voneinander, jedes die Zahl Null, 1 oder 2 dar, wobei die Summe von (e + f + g) eine ganze Zahl von 1 bis 4 bedeutet und wobei im Falle von e oder f oder g gleich Null die Gruppe $T^1$ bzw. $T^2$ bzw. $T^3$ ein Wasserstoffatom bedeutet; |
| p | steht für die Zahl 1 oder 2, wobei die Gruppe -NH-Z an einen aromatischen Rest von $P_1$, $P_2$ oder $P_3$ gebunden sein kann. |

**10.** Farbstoff nach Anspruch 1, dadurch gekennzeichnet, daß $R^x$ oder $R^y$ oder beide jedes für ein Wasserstoffatom stehen.

**11.** Farbstoff nach Anspruch 1 oder 10, dadurch gekennzeichnet, daß Y Vinylsulfonyl oder $\beta$-Sulfatoethylsulfonyl ist.

**12.** Farbstoff nach mindestens einem der Ansprüche 1, 10 und 11, dadurch gekennzeichnet, daß z die Zahl Null ist.

**13.** Farbstoff nach mindestens einem der Ansprüche 1 bis 12, dadurch gekennzeichnet, daß Hal und $X^{\circ}$ beide Chlor sind.

**14.** Verfahren zur Herstellung eines Farbstoffes von Anspruch 1, dadurch gekennzeichnet, daß man für den jeweiligen Farbstoff typische Vorprodukte, von denen eines eine Gruppe der allgemeinen Formel (2) enthält, miteinander umsetzt, oder
daß man eine Verbindung der allgemeinen Formel (20)

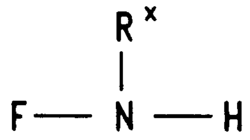

(20)

in welcher F und $R^x$ die in Anspruch 1 genannten Bedeutungen haben, mit einer Halogen-pyrimidin-carbonsäureamid-Verbindung der allgemeinen Formel (21)

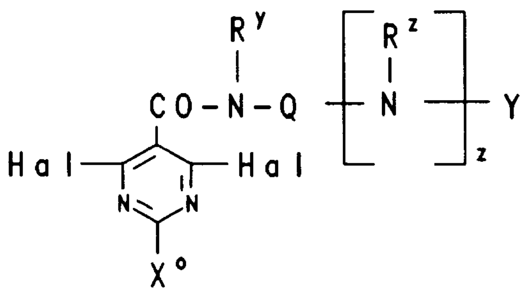

(21)

in welcher Hal, X°, $R^y$, $R^z$, Q, z und Y die in Anspruch 1 genannten Bedeutungen haben, umsetzt.

**15.** Verwendung eines Farbstoffes von mindestens einem der Ansprüche 1 bis 13 oder eines nach Anspruch 14 hergestellten Farbstoffes zum Färben und Bedrucken von hydroxy- und/oder carbonamidgruppenhaltigem Material, insbesondere Fasermaterial.

**16.** Verfahren zum Färben und Bedrucken von hydroxy- und/oder carbonamidgruppenhaltigem Material, vorzugsweise Fasermaterial, bei welchem man einen Farbstoff auf das Material aufbringt und den Farbstoff auf dem Material mittels Wärme und/oder mit Hilfe eines alkalisch wirkenden Mittels fixiert, dadurch gekennzeichnet, daß man als Farbstoff einen Farbstoff von mindestens einem der Ansprüche 1 bis 13 oder einen nach Anspruch 14 hergestellten Farbstoff verwendet.

Europäisches Patentamt

# EUROPÄISCHER RECHERCHENBERICHT

Nummer der Anmeldung
EP 93 11 9273

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 141 776 (CIBA-GEIGY AG)<br>* Zusammenfassung; Ansprüche *<br>--- | 1-16 | C09B62/20<br>D06P3/66<br>D06P3/24<br>C09B62/503 |
| A | EP-A-0 304 924 (CIBA-GEIGY AG)<br>* Ansprüche *<br>----- | 1-16 | |

| RECHERCHIERTE SACHGEBIETE (Int.Cl.5) |
|---|
| C09B<br>D06P |

Der vorliegende Recherchenbericht wurde für alle Patentansprüche erstellt

| Recherchenort | Abschlußdatum der Recherche | Prüfer |
|---|---|---|
| DEN HAAG | 7. April 1994 | Ketterer, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument